(19) Europäisches Patentamt / European Patent Office / Office européen des brevets

(11) **EP 4 397 423 A1**

(12) **EUROPEAN PATENT APPLICATION**
published in accordance with Art. 153(4) EPC

(43) Date of publication:
**10.07.2024 Bulletin 2024/28**

(21) Application number: **22864535.4**

(22) Date of filing: **30.08.2022**

(51) International Patent Classification (IPC):
**B21D 22/26** (2006.01)    **B21D 22/20** (2006.01)

(52) Cooperative Patent Classification (CPC):
**B21D 22/20; B21D 22/26**

(86) International application number:
**PCT/JP2022/032517**

(87) International publication number:
**WO 2023/032953 (09.03.2023 Gazette 2023/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.09.2021 JP 2021143894**

(71) Applicant: **NIPPON STEEL CORPORATION**
**Chiyoda-ku**
**Tokyo 100-8071 (JP)**

(72) Inventor: **KUBO, Masahiro**
**Tokyo 100-8071 (JP)**

(74) Representative: **Zimmermann & Partner**
**Patentanwälte mbB**
**Postfach 330 920**
**80069 München (DE)**

(54) **STRUCTURAL MEMBER AND METHOD FOR MANUFACTURING SAME**

(57)    A method for producing a structural member (10) includes a preparation step of preparing a starting material (M), and a shaping step of shaping the starting material (M) into the structural member (10) by using a die (20). The structural member (10) includes a member body (11), a first flange (12), and a second flange (13). The die (20) includes an upper die (23), a first lower die (21) for shaping the member body (11) and the first flange (12), and a second lower die (22) for shaping the second flange (13). The shaping step includes a first step that does not sandwich the starting material (M) between the upper die (23) and the second lower die (22), while sandwiching the starting material (M) between the upper die (23) and the first lower die (21), and a second step of shaping the second flange (13) by sandwiching the starting material (M) between the upper die (23) and the second lower die (22) after the first step.

FIG. 3D

**Description**

TECHNICAL FIELD

The present disclosure relates to a structural member for automobiles and a method for producing the same.

BACKGROUND ART

An automobile is composed of a large number of structural members. The structural members include, for example, a pillar, a side member, a side sill, a cross member, a floor panel, a roof panel, and the like. The structural members are produced by performing, for example, press working on metal sheets. For example, Patent Literatures 1 to 3 disclose producing methods that shapes a metal sheet into a structural member by using a die including an upper die and a lower die.

In the producing method of Patent Literature 1, first, a metal sheet is placed on a lower die, and a predetermined region of this metal sheet is pressed by a pad. Next, an upper die is moved closer to the lower die, and the metal sheet is sandwiched by the upper die and the lower die and shaped into a structural member while performing in-plane movement of one longitudinal edge of the metal sheet. In Patent Literature 1, a center pillar is exemplified as a structural member produced with this producing method.

Patent Literature 2 discloses a producing method suitable for structural members, such as a side member, a side sill, and a cross member. A structural member to be produced in Patent Literature 2 has a substantially hat-shaped transverse cross section. That is, the structural member includes a top plate, two vertical walls, and two flanges. Outward flanges rising from the top plate and each of the vertical walls are provided in the longitudinal ends of the structural member. In Patent Literature 2, the outward flanges and the other portions are shaped by a common lower die. In Patent Literature 2, shaping of the structural member is started in a state where at least regions that will become the outward flanges and regions near such regions of a metal sheet are separated from a top surface of the lower die.

Patent Literature 3 discloses a producing method for a structural member having a T shape (T-shaped component), such as a cross member. The T-shaped component includes a top plate having a T shape, vertical walls continuous with the top plate, and flanges continuous with lower ends of the vertical walls. The top plate includes a vertical portion and horizontal portions connected to the vertical portion.

The producing method of Patent Literature 3 includes a first shaping step of shaping a metal sheet into an intermediate shape component, a trimming step of trimming the intermediate shape component to obtain a trimmed component, and a second shaping step of shaping the trimmed component into a T-shaped component by using a die including an upper die and a lower die. In the first shaping step, convex-shaped portions are formed in parts of the vertical portion of the top plate that are adjacent to the horizontal portions. Additionally, in the first shaping step, a curved R portion is formed so that a connection portion between a portion of the vertical wall continuous with the horizontal portion of the top plate and the flange is raised. The convex-shaped portion and the curved R portion are crushed by the upper die in the second shaping step.

CITATION LIST

PATENT LITERATURE

Patent Literature 1: Japanese Patent No. 6436166
Patent Literature 2: Japanese Patent No. 5958644
Patent Literature 3: Japanese Patent Application Publication No. 2019-013952

SUMMARY OF INVENTION

TECHNICAL PROBLEM

In the structural member of Patent Literature 3, the flanges continuous with lower ends of the vertical walls are used as, for example, first flanges that join the structural member to a floor panel. The horizontal portions of the top plate, and portions of the vertical walls that are continuous with the horizontal portions of the top plate are used as, for example, second flanges that join the structural member to a side sill. The horizontal portions of the top plate, and the portions of the vertical walls that are continuous with the horizontal portions of the top plate have a substantially L shape in lateral view of the structural member.

When producing such a structural member with press working, a crack may be generated in the second flanges. For example, in a case of a joint structure having a T shape (T-shaped joint structure) in plan view, it is preferable that if a corner R portion can be shaped relatively sharply, because the degree of freedom of spatial allocation among other components is increased, dimensional constraints on the design are decreased, and further, the member rigidity is improved. However, when the curvature radius of the corner R portion is 20.0 mm or less, a crack is easily generated in an edge of a portion of the second flange extending in a height direction of the structural member, and in a connecting portion between the first flange and the second flange. A crack in the second flange is easily generated particularly when shaping the structural member from a steel sheet with high tensile strength. Additionally, when producing a similar structural member with cold pressing or hot stamping by using a 6000 series aluminum alloy sheet with relatively large total elongation, since the uniform elongation of the aluminum alloy sheet is small, a rapid decrease in sheet thickness locally occurs in a distortion concentration portion, and a crack is easily generated.

The present disclosure aims to suppress the generation of a crack in a flange at the time of producing a structural member for automobiles. Additionally, the present disclosure aims to eliminate an intermediate trimming step for the flange at the time of producing the structural member for the automobiles. Further, the present disclosure aims to provide a structural member, such as an integral T-shaped joint structure, having high strength, a small curvature radius of the corner R portion, and few dimensional constraints on the design, which has long been craved for as a structural member for automobiles.

SOLUTION TO PROBLEM

A producing method according to the present disclosure is a method for producing a structural member for automobiles. The producing method includes a preparation step of preparing a starting material made of a metal sheet, and a shaping step of shaping the starting material into a structural member by using a die. The structural member includes a member body, a first flange, and a second flange. The member body includes a top plate and a vertical wall. The top plate has two side portions. The two side portions extend in a longitudinal direction of the structural member. The two side portions face each other in a width direction of the structural member. The vertical wall is connected to each of the side portions via a ridgeline portion. The first flange is connected to the vertical wall on the opposite side of the top plate, and protrudes from the vertical wall in the width direction of the structural member. The second flange is provided continuously with an end of the member body in the longitudinal direction. The second flange includes a horizontal flange part and a vertical flange part. The horizontal flange part protrudes from the top plate in the width direction of the structural member. The vertical flange part is connected to an end of the horizontal flange part on a member body side via the ridgeline portion, and extends from the horizontal flange part to the first flange. The die includes an upper die, a first lower die for shaping the member body and the first flange, and a second lower die for shaping the second flange. The first lower die is arranged to face the upper die. The second lower die is arranged next to the first lower die and to face the upper die. A shaping step includes a first step that does not sandwich a starting material between the upper die and the second lower die, while sandwiching the starting material between the upper die and the first lower die, and a second step of shaping the second flange by sandwiching the starting material between the upper die and the second lower die after the first step.

ADVANTAGEOUS EFFECTS OF INVENTION

With the method of producing a structural member for automobiles according to the present disclosure, the generation of a crack in a flange can be suppressed. Additionally, with the method of producing a structural member for automobiles according to the present disclosure, an intermediate trimming step for the flange can be eliminated. Further, according to the present disclosure, it is possible to provide a structural member, such as an integral T-shaped joint structure, having high strength, a small curvature radius of the corner R portion, and few dimensional constraints on the design, which has long been craved for as a structural member for automobiles.

BRIEF DESCRIPTION OF DRAWINGS

[FIG. 1] FIG. 1 is a perspective view of a structural member according to a first embodiment.
[FIG. 2] FIG. 2 is a transverse cross sectional view of the structural member illustrated in FIG. 1.
[FIG. 3A] FIG. 3A is a schematic diagram for describing a method for producing the structural member.
[FIG. 3B] FIG. 3B is a schematic diagram for describing the method for producing the structural member.
[FIG. 3C] FIG. 3C is a schematic diagram for describing the method for producing the structural member.
[FIG. 3D] FIG. 3D is a schematic diagram for describing the method for producing the structural member.

[FIG. 3E] FIG. 3E is a schematic diagram for describing the method for producing the structural member.
[FIG. 3F] FIG. 3F is a schematic diagram for describing the method for producing the structural member.
[FIG. 3G] FIG. 3G is a schematic diagram for describing the method for producing the structural member.
[FIG. 3H] FIG. 3H is a schematic diagram for describing the method for producing the structural member.
[FIG. 3I] FIG. 3I is a schematic diagram for describing the method for producing the structural member.
[FIG. 4] FIG. 4 is a partial enlarged view of the structural member illustrated in FIG. 1.
[FIG. 5] FIG. 5 is a partial enlarged view of the structural member illustrated in FIG. 1.
[FIG. 6] FIG. 6 is a perspective view of a structural member according to a second embodiment.
[FIG. 7] FIG. 7 is a perspective view of a structural member according to a modification of the second embodiment.
[FIG. 8] FIG. 8 is a graph that is obtained by analysis, and that illustrates, for an edge of a vertical flange part included in the structural member, the relationship between the distance from an end on a horizontal flange part side and a sheet thickness reduction rate.

DESCRIPTION OF EMBODIMENTS

A producing method according to an embodiment is a method for producing a structural member for automobiles. The producing method includes a preparation step of preparing a starting material made of a metal sheet, and a shaping step of shaping the starting material into a structural member by using a die. The structural member includes a member body, a first flange, and a second flange. The member body includes a top plate and a vertical wall. The top plate has two side portions. The two side portions extend in a longitudinal direction of the structural member. The two side portions face each other in a width direction of the structural member. The vertical wall is connected to each of the side portions via a ridgeline portion. The first flange is connected to the vertical wall on the opposite side of the top plate, and protrudes from the vertical wall in the width direction of the structural member. The second flange is provided continuously with an end of the member body in the longitudinal direction. The second flange includes a horizontal flange part and a vertical flange part. The horizontal flange part protrudes from the top plate in the width direction of the structural member. The vertical flange part is connected to an end of the horizontal flange part on a member body side via the ridgeline portion, and extends from the horizontal flange part to the first flange. The die includes an upper die, a first lower die for shaping the member body and the first flange, and a second lower die for shaping the second flange. The first lower die is arranged to face the upper die. The second lower die is arranged next to the first lower die and to face the upper die. A shaping step includes a first step that does not sandwich a starting material between the upper die and the second lower die, while sandwiching the starting material between the upper die and the first lower die, and a second step of shaping the second flange by sandwiching the starting material between the upper die and the second lower die after the first step (a first configuration).

In the producing method according to the first configuration, the structural member is shaped from the starting material by using the first lower die for shaping the member body and the first flange, and the second lower die for shaping the second flange continuous with a longitudinal end of the member body. In the first step of shaping, while the starting material is sandwiched by the upper die and the first lower die, the starting material is not sandwiched by the upper die and the second lower die. That is, a portion of the starting material that will become the second flange is not restrained by the die until the middle of shaping. Accordingly, a flow of material occurs in the portion of the starting material that will become the second flange. The material mainly flows from the horizontal flange part continuous with the top plate of the member body to the vertical flange part that is connected to the horizontal flange part and that extends to the first flange. Therefore, it is possible to suppress the generation of a crack in the edge of the vertical flange part, and in the connecting portion between the vertical flange part and the first flange.

In the producing method according to the first configuration, the die may further include a pad. In this case, in the first step, it is preferable to sandwich the starting material between the upper die and the first lower die after pressing the starting material with the pad (a second configuration).

According to the second configuration, in the first step of shaping, after the starting material is pressed with the pad, the starting material is sandwiched by the upper die and the first lower die. Accordingly, when shaping the starting material into the structural member, the misalignment of the starting material can be prevented from occurring.

In the producing method according to the first or second configuration, by providing a step height in advance between a shaping surface of the first lower die and a shaping surface of the second lower die, when the upper die is relatively moved closer to the first lower die and the second lower die in the first step, the first lower die may sandwich the starting material with the upper die before the second lower die. In the second step, by moving the upper die in a state of sandwiching the starting material with the first lower die further closer to the second lower die relatively, the step height may disappear and the second lower die may sandwich the starting material with the upper die. It is preferable that the size of the step height before starting the first step is the sheet thickness of the starting material or more to 5.0 times of the sheet thickness or less (a third configuration).

In the third configuration, by providing the step height in advance between the shaping surface of the first lower die and the shaping surface of the second lower die, the first lower die sandwiches the starting material with the upper die before the second lower die for shaping the second flange. When this step height is too small, since the portion of the starting material that will become the second flange is restrained at an early stage by the second lower die, and the flow of the material becomes insufficient, a crack is easily generated in the vertical flange part of the second flange, and the connecting portion between the vertical flange part and the first flange. On the other hand, when the step height is too large, wrinkles are easily generated in the boundary portion between the horizontal flange part of the second flange and the top plate of the member body. However, in the third configuration, the above-described step height is set to have an appropriate size. That is, the size of the step height is the sheet thickness of the starting material or more to 5.0 times or less the sheet thickness. Therefore, it is possible to suppress the generation of a crack and wrinkles in the second flange and its vicinity.

In the producing method according to any of the first to third configurations, the first lower die may be configured to be movable up and down by a cushion mechanism. In this case, in the shaping step, the upper die can be moved down toward the first lower die and the second lower die (a fourth configuration).

The producing method according to any of the first to fourth configurations may further include a preshaping step of shaping an intermediate shaped product from a metal sheet. In this case, in the shaping step, by using the intermediate shaped product as the starting material, the structural member can be shaped from the starting material (a fifth configuration).

The producing method according to any of the first to fifth configurations may further include a heating step of heating the starting material. In this case, in the shaping step, the starting material heated in the heating step can be shaped into the structural member (a sixth configuration).

In the producing method according to any of the first to sixth configurations, the metal sheet composing the starting material may be a steel sheet having a tensile strength of 590 MPa or more (a seventh configuration).

The structural member according to an embodiment is a structural member for automobiles. The structural member includes a member body, a first flange, and a second flange. The member body includes a top plate and a vertical wall. The top plate has two side portions. The two side portions extend in a longitudinal direction of the structural member. The two side portions face each other in a width direction of the structural member. The vertical wall is connected to each of the side portions via a ridgeline portion. The first flange is connected to the vertical wall on the opposite side of the top plate, and protrudes from the vertical wall in the width direction of the structural member. The second flange is provided continuously with an end of the member body in the longitudinal direction. The second flange includes a horizontal flange part and a vertical flange part. The horizontal flange part protrudes from the top plate in the width direction of the structural member. The vertical flange part is connected to an end of the horizontal flange part on a member body side via the ridgeline portion, and extends from the horizontal flange part to the first flange. When the sheet thickness reduction rate based on the sheet thickness of the top plate is set to T [%], the length of a region having the sheet thickness reduction rate T that satisfies the following Formula (1) in an edge of the vertical flange part is 2.0 times or more to 6.0 times or less the sheet thickness of the top plate (an eighth configuration).

$$0.9 \times \mathrm{Tmax} \leq \mathrm{T} \leq \mathrm{Tmax} \quad (1)$$

where Tmax [%] is the maximum value of the sheet thickness reduction rate in the edge of the vertical flange part.

In the structural member according to the eighth configuration, in the edge of the vertical flange part of the second flange, the length of the region that satisfies the above-described Formula (1) is 2.0 times or more to 6.0 times or less the sheet thickness of the top plate. This means that the sheet thickness distribution of the edge of the vertical flange part is relatively uniform. In this case, at the time of use of the structural member, the stress concentration to a sheet thickness reduction portion in the edge of the vertical flange part is less likely to occur, and it is possible to suppress the generation of a crack from the edge of the vertical flange part. That is, the structural member can have an excellent durability.

In the structural member according to the eighth configuration, the length of a region having a Vickers hardness HV [HV] that satisfies the following Formula (2) in the edge of the vertical flange part may be 5.0 times or more to 10.0 times or less the sheet thickness of the top plate (a ninth configuration).

$$\mathrm{HV_{Tmax}} - 10.0 \leq \mathrm{HV} \leq \mathrm{HV_{Tmax}} + 10.0 \quad (2)$$

where $\mathrm{HV_{Tmax}}$ [HV] is the Vickers hardness of a portion having the maximum value Tmax of the sheet thickness reduction rate of the edge of the vertical flange part. HV and $\mathrm{HV_{Tmax}}$ are Vickers hardnesses in the case of a test force of 294.2 N.

As in the ninth configuration, in the edge of the vertical flange part of the second flange, when the length of the region that satisfies the above-described Formula (2) is 5.0 times or more to 10.0 times or less the sheet thickness of the top plate, it means that the hardness distribution of the edge of the vertical flange part is relatively uniform. In this case, the stress concentration in the edge of the vertical flange part is less likely to occur, and it is possible to suppress the generation of a crack. That is, the structural member can have an excellent durability.

In the structural member according to the eighth or ninth configuration, the average value of the Vickers hardness measured at 30 locations that are distant from each other by the sheet thickness of the top plate or more in a surface of the vertical flange part may be 300.0 Hv or more, and the standard deviation of the Vickers hardness may be 70.0 Hv or less (a tenth configuration). The Vickers hardness at this time is the Vickers hardness at a test force of 10 kgf (98.07 N).

The structural member according to any of the eighth to tenth configurations may be formed with a steel sheet having a tensile strength of 590 MPa or more (an eleventh configuration).

In the structural member according to any of the eighth to eleventh configurations, the ridgeline portion can include a corner portion extending toward the horizontal flange part from the top plate. The corner portion has a curvature radius of, for example, 20.0 mm or less in plan view of the structural member (a twelfth configuration).

When the curvature radius of the corner portion of the ridgeline portion is relatively as small as 20.0 mm or less, the intersection angle of the vertical wall and the vertical flange part, each of which is continuous with the ridgeline portion, can be, for example, a substantially right angle. Accordingly, the structural member can have an excellent space efficiency. That is, the degree of freedom of spatial allocation among other components is increased, and dimensional constraints on the design of the structural member and the other components can be reduced. Additionally, even when a region where the structural member is arranged is narrow, the load transfer ability of the structural member can be secured. Specifically, when a load in the longitudinal direction is input to the structural member arranged in a narrow region, the vertical flange part can receive the load on the surface, and the load is easily transmitted from the vertical flange part to the member body. Therefore, the structural member can exhibit good transfer ability for a load in the longitudinal direction.

Hereinafter, embodiments of the present disclosure will be described with reference to the drawings. In the drawings, the same or corresponding configurations are denoted by the same numerals, and the same description will not be repeated.

<First Embodiment>

[Configuration of Structural Member]

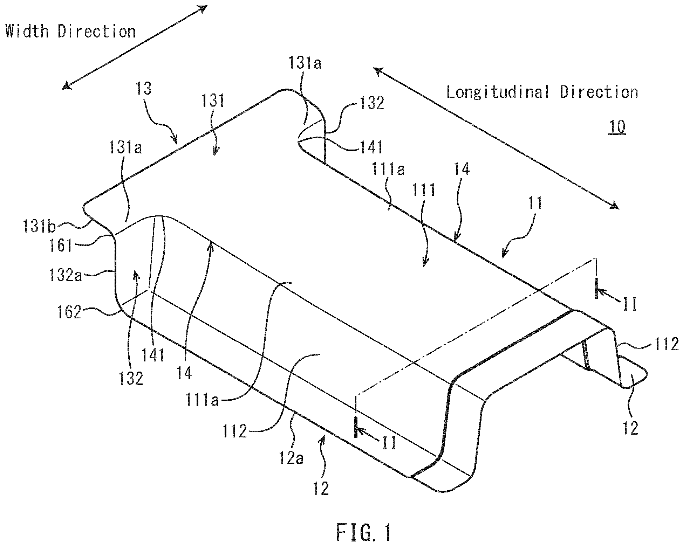

FIG. 1 is a perspective view of a structural member 10 according to a first embodiment. The structural member 10 is used as a structural member for automobiles. Typically, the structural member 10 is a frame extending in the left and right direction of an automobile. The structural member 10 is, for example, a cross member arranged on a floor panel or behind a floor panel, a cross extension provided at an end of a cross member, or the like.

Referring to FIG. 1, the structural member 10 includes a member body 11, two first flanges 12, and a second flange 13.

The member body 11 includes a top plate 111 and two vertical walls 112. The top plate 111 and each of the vertical walls 112 extend in the substantially longitudinal direction of the structural member 10 (the left and right direction of an automobile).

The top plate 111 includes two side portions 111a. Each of these side portions 111a extend in the longitudinal direction of the structural member 10. The two side portions 111a face each other in the width direction of the structural member 10 (the front and back direction of an automobile). Each of the side portions 111a is connected to the vertical wall 112 via a ridgeline portion 14. The ridgeline portion 14 extends from the member body 11 to the second flange 13.

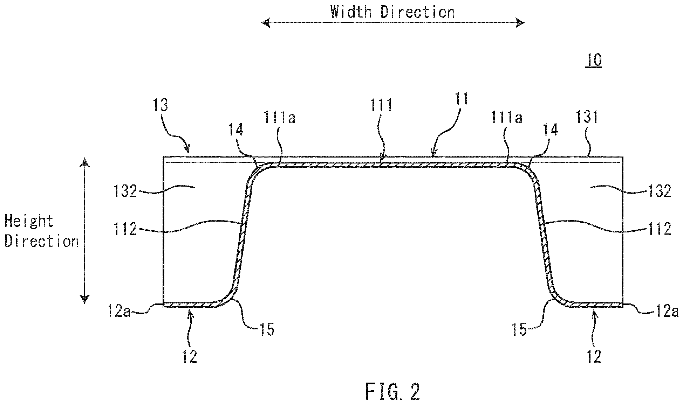

FIG. 2 is a transverse cross sectional view (II-II cross-sectional view) of the structural member 10. Referring to FIG. 2, the two vertical walls 112 face each other in the width direction of the structural member 10. Each vertical wall 112 generally extends in the height direction of the structural member 10 (the up and down direction of an automobile) in transversal cross sectional view of the structural member 10. The ridgeline portion 14 continuous with each vertical wall 112 has a substantially arc shape in transversal cross sectional view of the structural member 10.

The first flanges 12 are connected to the vertical walls 112 on the opposite side of the top plate 111. Each of the first flanges 12 is connected to a lower end of the vertical wall 112 in the paper of FIG. 2. Each first flange 12 is connected to the vertical wall 112 via a ridgeline portion 15. The ridgeline portion 15 has a substantially arc shape in transversal cross sectional view of the structural member 10.

The first flanges 12 protrude from the respective vertical walls 112 in the width direction of the structural member 10. The first flanges 12 are fixed to, for example, a top surface or a bottom surface of a floor panel of an automobile. Similar to the top plate 111 and the vertical walls 112, each of the first flanges 12 extends in the substantially longitudinal direction of the structural member 10. Each first flange 12 has an open edge 12a.

The second flange 13 is provided continuously with one end of the member body 11 in the longitudinal direction of the structural member 10. The second flange 13 is also continuous with the two first flanges 12. The second flange 13 is fixed to, for example, a side sill of an automobile. The second flange 13 includes a horizontal flange part 131 and two vertical flange parts 132.

Referring to FIG. 1 again, the horizontal flange part 131 is provided continuously with the top plate 111 of the member body 11. The horizontal flange part 131 is continuous with one end of the top plate 111 in the longitudinal direction. The horizontal flange part 131 is located on, for example, a plane that is substantially or generally the same with the top plate 111. Although the horizontal flange part 131 may be flush with the top plate 111, the horizontal flange part 131 may be slightly tilted with respect to the top plate 111. The horizontal flange part 131 protrudes from the top plate 111 in the width direction of the structural member 10. That is, in the width direction of the structural member 10, the length of the horizontal flange part 131 is larger than the length of the top plate 111. Therefore, the horizontal flange part 131 and the top plate 111 form a substantially T shape in plan view of the structural member 10. The horizontal flange part 131 is connected to the top plate 111 via corner portions 141 included in the ridgeline portions 14 on both sides of the top plate 111, respectively. Each corner portion 141 extends from the top plate 111 toward the horizontal flange part 131. Each corner portion 141 has a substantially arc shape in plan view of the structural member 10. The curvature radius of each corner portion 141 is, for example, 20.0 mm or less in plan view of the structural member 10. The amount of protrusion (flange length) of the horizontal flange part 131 from the top plate 111 is, for example, 25.0 mm or less.

Each of the vertical flange parts 132 is connected to an end 131a of the horizontal flange part 131 on the member body 11 side via the ridgeline portion 14. The end 131a is an end of a portion of the horizontal flange part 131, the portion protrudes from the top plate 111 to both sides of the width direction, and the end is on the member body 11 side of the portion. Each vertical flange part 132 is connected to the horizontal flange part 131 via the ridgeline portion 14 extending from the member body 11 to the second flange 13.

Each of the vertical flange parts 132 extends from the horizontal flange part 131 to the first flange 12. That is, each vertical flange part 132 generally extends in the height direction of the structural member 10 from the end 131a of the horizontal flange part 131 toward the first flange 12. Each vertical flange part 132 is integral with the horizontal flange part 131, the vertical wall 112 of the member body 11, and the first flange 12. The corner portion between the vertical flange part 132 and the vertical wall 112 has a curvature radius of, for example, 20.0 mm or less.

Each vertical flange part 132 has an open edge 132a. The edge 132a generally extends in the height direction of the structural member 10. The edge 132a of each vertical flange part 132 is connected to a side edge 131b of the horizontal flange part 131 via a connection edge 161. Additionally, the edge 132a of each vertical flange part 132 is connected to the edge 12a of the first flange 12 via a connection edge 162. The connection edges 161 and 162 have substantially arc shapes in side view of the structural member 10.

[Method for Producing Structural Member]

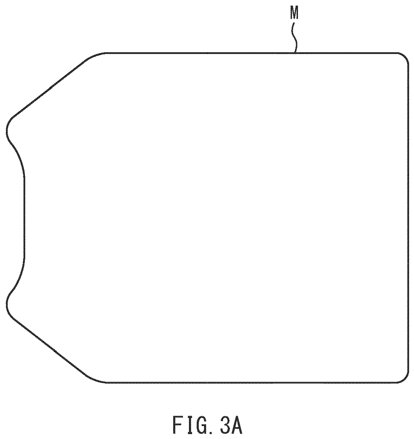

Hereinafter, a method for producing the structural member 10 will be described with reference to FIG. 3A to FIG. 3I. FIG. 3A to FIG. 3I are schematic diagrams for describing the method for producing the structural member 10. The method for producing the structural member 10 includes a step of preparing a starting material M, and a step of shaping the starting material M into the structural member 10.

(Preparation Step)

Referring to FIG. 3A, in a preparation step, the starting material M made of a metal sheet is prepared. The starting material M is, for example, a blank punched into a shape of the expanded structural member 10 (FIG. 1 and FIG. 2). The metal sheet composing the starting material M is, for example, a steel sheet. This steel sheet has a tensile strength of, for example, 590 MPa or more. The steel sheet may have a tensile strength of 780 MPa or more, or may have a tensile strength of 980 MPa or more. The sheet thickness of the starting material M is, for example, 1.0 mm or more to 5.0 mm or less.

(Shaping Step)

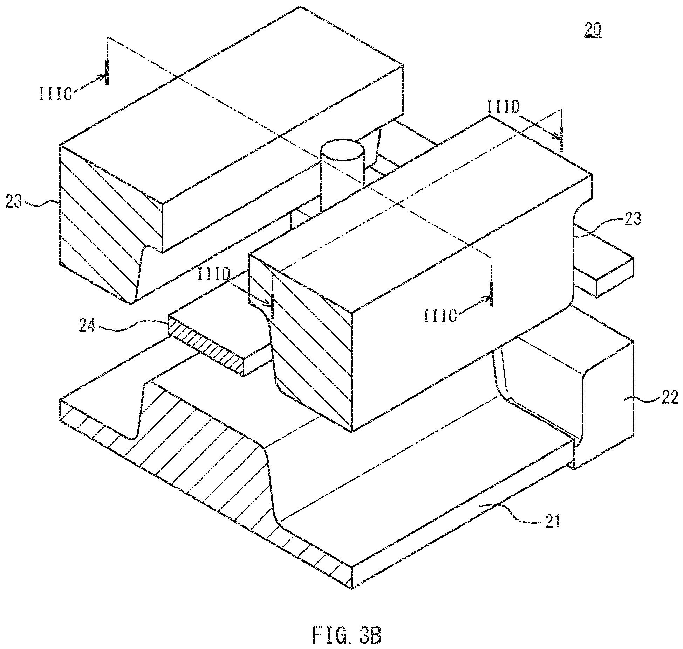

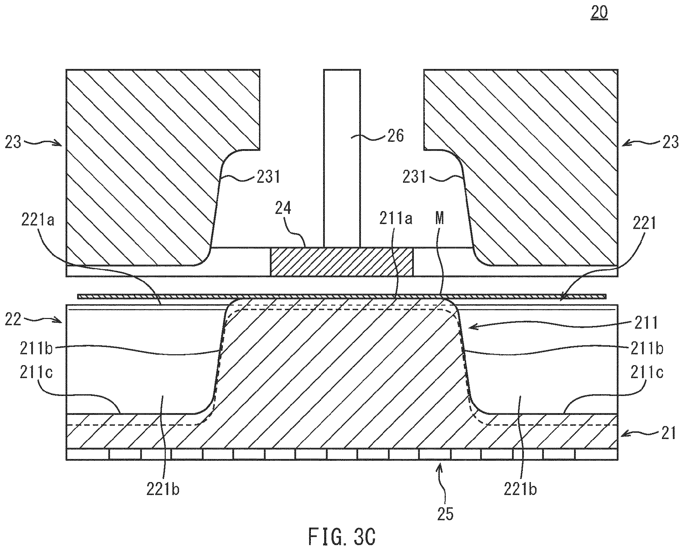

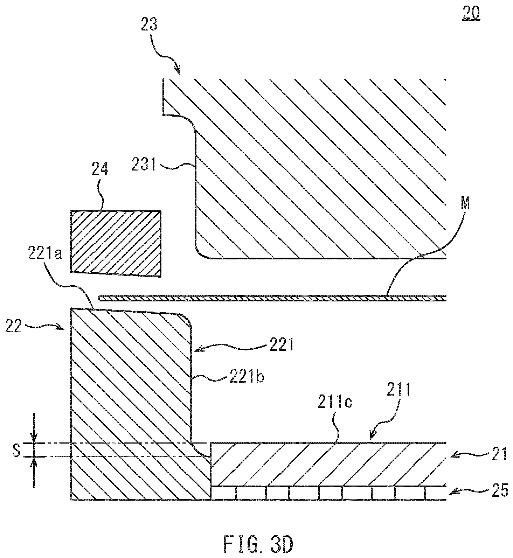

As illustrated in FIG. 3B to FIG. 3D, in a shaping step, in order to shape the starting material M into the structural member 10 (FIG. 1 and FIG. 2), a die 20 is used. First, the configuration of the die 20 will be described. FIG. 3B is a perspective view of the die 20. FIG. 3C is a transverse cross sectional view (IIIC-IIIC cross-sectional view) of the die 20. FIG. 3D is a vertical cross-sectional view (IIID-IIID cross-sectional view) of the die 20.

Referring to FIG. 3B, the die 20 includes a first lower die 21, a second lower die 22, two upper dies 23, and a pad 24. The lower dies 21 and 22 are punches, and the upper dies 23 are dies corresponding to the lower dies 21 and 22. When starting the shaping step, the lower dies 21 and 22 are arranged to face the upper dies 23 and the pad 24.

The lower dies 21 and 22 are arranged, for example, under the upper dies 23 and the pad 24. The first lower die 21, the second lower die 22, the upper dies 23, and the pad 24 are attached to, for example, a known pressing machine (illustration omitted).

Referring to FIG. 3C, the first lower die 21 mainly shapes the member body 11 and the first flanges 12 (FIG. 1 and FIG. 2). The first lower die 21 is configured to be movable up and down by a cushion mechanism 25. The cushion mechanism 25 may be one generally used in a pressing machine, and includes, for example, a die cushion, a cushion pin, and the like.

The first lower die 21 has a shaping surface 211. The shaping surface 211 has an upward convex shape. The shaping surface 211 includes a top surface 211a, two side surfaces 211b, and two flange surfaces 211c. The top surface 211a is an upward-facing surface that faces the pad 24. The two side surfaces 211b are arranged on both sides of the top surface 211a. The flange surfaces 211c are connected to lower ends of the side surfaces 211b, and laterally protrude from the side surfaces 211b, respectively.

The second lower die 22 is a die separated from the first lower die 21. The second lower die 22 is arranged next to the first lower die 21 in the longitudinal direction of the die 20. The second lower die 22 mainly shapes the second flange 13 (FIG. 1 and FIG. 2). The second lower die 22 has a shaping surface 221.

Referring to FIG. 3C and FIG. 3D, the shaping surface 221 of the second lower die 22 includes a top surface 221a and side surfaces 221b. The top surface 221a is an upward-facing surface that faces the pad 24. Each side surface 221b is connected to the top surface 221a on the first lower die 21 side, and extends downward from the top surface 221a.

Before starting the shaping step, a step height exists between the shaping surface 211 of the first lower die 21 and the shaping surface 221 of the second lower die 22. In an initial state, the shaping surface 221 of the second lower die 22 is located lower than the shaping surface 211 of the first lower die 21. More particularly, a step height exists between the top surfaces 211a and 221a, since the top surface 221a of the second lower die 22 is located lower than the top surface 211a of the first lower die 21. Additionally, a bottom end portion of the side surface 221b of the second lower die 22 is located lower than the flange surface 211c of the first lower die 21, and a step height exists in the boundary portion between the side surface 221b of the second lower die 22 and the flange surface 211c of the first lower die 21. It is preferable that a size S of the step height between the shaping surface 211 of the first lower die 21 and the shaping surface 221 of the second lower die 22 is the sheet thickness of the starting material M or more. The size S of the step height is, for example, 5.0 times or less of the sheet thickness of the starting material M. The size S of the step height is substantially the same as the stroke (cushion stroke) of the cushion mechanism 25.

Subsequently referring to FIG. 3C and FIG. 3D, the shaping surfaces 231 of the upper dies 23 have shapes corresponding to the shaping surface 211 of the first lower die 21, and the shaping surface 221 of the second lower die 22. The pad 24 is arranged between the upper dies 23. The upper dies 23 and the pad 24 are attached to, for example, a slide that is movable up and down in a pressing machine (illustration omitted). The pad 24 is connected to the slide via, for example, a stretchable elastic member 26.

In the shaping step, the starting material M is shaped into the structural member 10 (FIG. 1 and FIG. 2) by using the die 20 configured as described above. The shaping step includes a first step and a second step. In the first step, while the starting material M is sandwiched by the upper dies 23 and the first lower die 21, the starting material M is not sandwiched by the upper dies 23 and the second lower die 22. In the second step, the starting material M is sandwiched by the upper dies 23 and the second lower die 22 to shape the second flange 13 (FIG. 1 and FIG. 2). Hereinafter, each step will be specifically described.

(First Step)

As illustrated in FIG. 3C and FIG. 3D, when starting the shaping step, the upper dies 23 and the pad 24 that are attached to the slide of the pressing machine (illustration omitted) are located at a top dead center. In this state, the starting material M is placed on the top surface 211a of the first lower die 21. Then, the upper dies 23 and the pad 24 are moved down toward the lower dies 21 and 22 with the slide of the pressing machine, so as to move the upper dies 23 and the pad 24 closer to the lower dies 21 and 22.

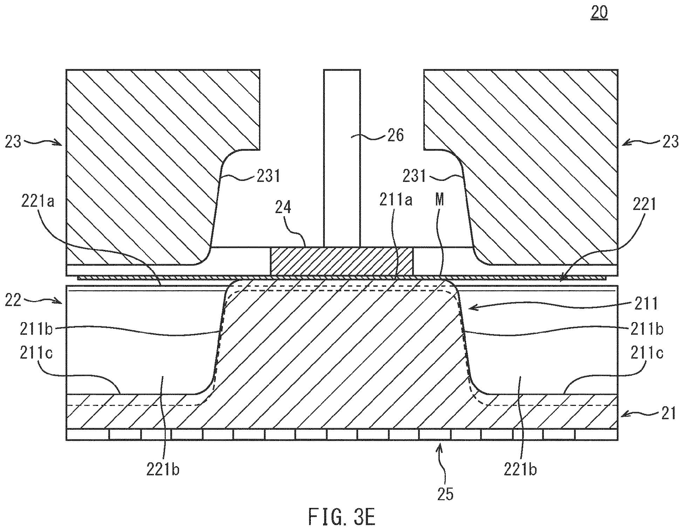

When the upper dies 23 and the pad 24 are moved closer to the lower dies 21 and 22, as illustrated in FIG. 3E, first, the starting material M on the first lower die 21 is pressed down by the pad 24. That is, the starting material M is sandwiched by the top surface 211a of the first lower die 21 and the pad 24. On the other hand, since the top surface 221a of the second lower die 22 is located slightly lower than the top surface 211a of the first lower die 21, the starting material M is not sandwiched between the top surface 221a of the second lower die 22 and the pad 24. At the time when the starting material M is sandwiched by the first lower die 21 and the pad 24, a gap exists between the second lower die 22 and the starting material M.

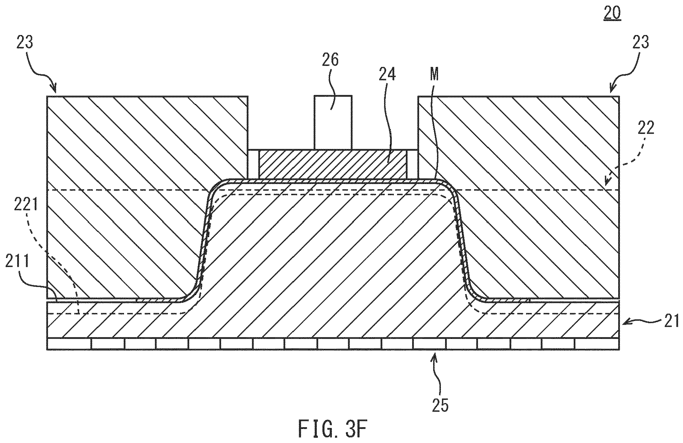

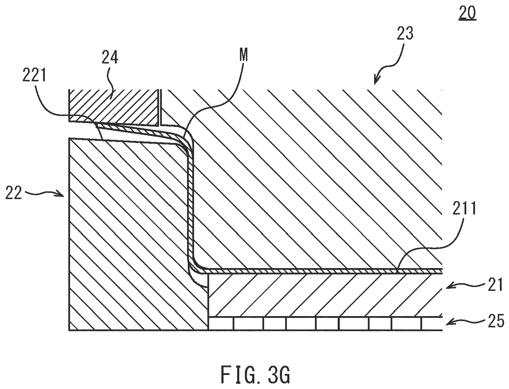

After pressing the starting material M on the first lower die 21 by the pad 24, the upper dies 23 are moved further closer to the lower dies 21 and 22 by further moving down the slide of the pressing machine (illustration omitted). By moving down the slide while pressing the starting material M on the first lower die 21 by the pad 24, the elastic member 26 that connects the pad 24 to the slide is contracted, and the upper dies 23 are relatively moved down with respect to the pad 24. Accordingly, as illustrated in FIG. 3F and FIG. 3G, the starting material M is pressed by the upper dies 23 and the first lower die 21.

As described above, the step height exists in advance between the shaping surface 211 of the first lower die 21 and the shaping surface 221 of the second lower die 22. Therefore, when the upper dies 23 are moved closer to the lower dies 21 and 22, the first lower die 21 sandwiches the starting material M with the upper dies 23 before the second lower die 22. At the time when the starting material M is pressed by the upper dies 23 and the first lower die 21, the second lower die 22 does not press the starting material M. At this time, a gap exists between the starting material M and the second lower die 22.

(Second Step)

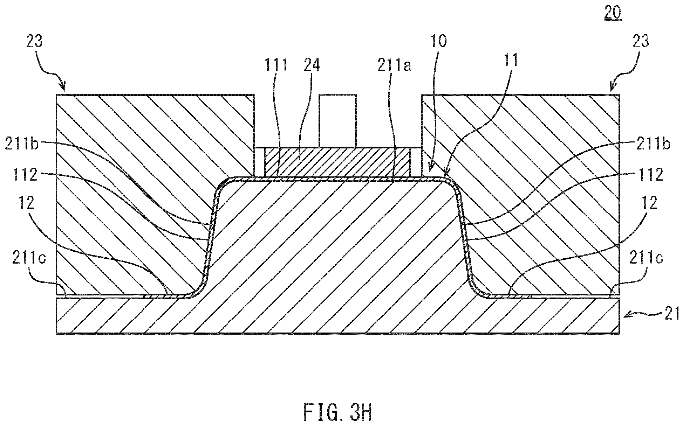

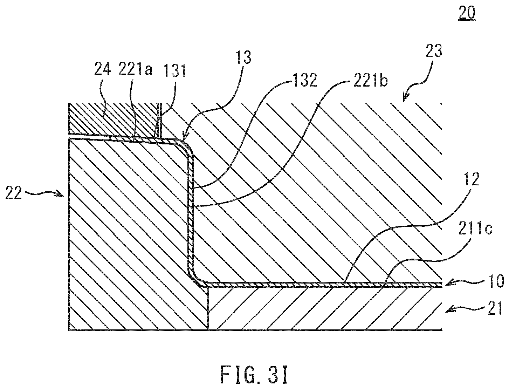

When the upper dies 23 in the state where the starting material M is sandwiched by the upper dies 23 and the first lower die 21 are moved further closer to the second lower die 22, the first lower die 21 supported by the cushion mechanism 25 is pressed down by the upper dies 23. Accordingly, the step height between the shaping surface 211 of the first lower die 21 and the shaping surface 221 of the second lower die 22 is gradually decreased. Referring to FIG. 3H and FIG. 3I, when the upper dies 23 reach a bottom dead center, the step height between the first lower die 21 and the second lower die 22 disappears, and the starting material M is sandwiched (pressed) between the upper dies 23 and the second lower die 22. Additionally, the starting material M is sandwiched by the pad 24 and the second lower die 22.

When the upper dies 23 reach the bottom dead center, the starting material M is shaped into the structural member 10. A portion of the starting material M pressed between the pad 24 and the top surface 211a of the first lower die 21 becomes the top plate 111 of the member body 11. Portions of the starting material M pressed between the upper dies 23 and the side surfaces 211b of the first lower die 21 become the vertical walls 112 of the member body 11. Portions of the starting material M pressed between the upper dies 23 and the flange surfaces 211c of the first lower die 21 become the first flanges 12. A portion of the starting material M pressed between the pad 24 and the top surface 221a of the second lower die 22 mainly becomes the horizontal flange part 131 of the second flange 13. A portion of the starting material M pressed between the upper dies 23 and the side surfaces 221b of the second lower die 22 mainly becomes the vertical flange parts 132 of the second flange 13.

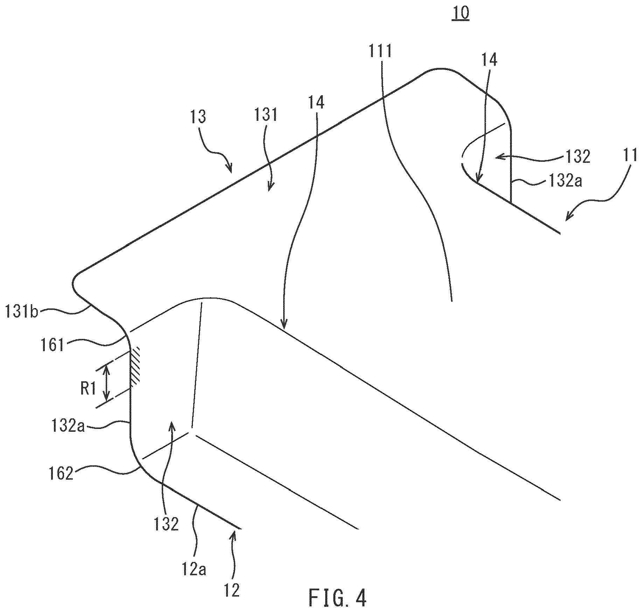

Referring to FIG. 4, in the structural member 10 after the shaping step, the edge 132a of each vertical flange part 132 includes a modification region R1. The modification region R1 is in the range from an R stop (on the vertical flange part 132 side) of the connection edge 161 that connects the horizontal flange part 131 and the vertical flange part 132, to an R stop of the connection edge 162 (on the vertical flange part 132 side) that connects the vertical flange part 132 and the first flange 12.

The entire modification region R1 has a sheet thickness reduction rate T [%] that satisfies the following Formula (1).

$$0.9 \times \mathrm{Tmax} \leq \mathrm{T} \leq \mathrm{Tmax} \quad (1)$$

Tmax [%] in the above-described Formula (1) is the maximum value of the sheet thickness reduction rate T in the edge 132a of each of the vertical flange parts 132. The sheet thickness reduction rate T is the sheet thickness reduction rate based on the sheet thickness of the top plate 111 of the member body 11. When the sheet thickness of the top plate 111 is t0, and the sheet thickness of the edge 132a of each vertical flange part 132 at an arbitrarily selected position is 11, the sheet thickness reduction rate T [%] at this position can be obtained by (t0 - 11) / t0 x 100. The sheet thickness t0 of the top plate 111 is the sheet thickness of a portion of the top plate 111 in which distortion due to shaping is not substantially generated. That is, the sheet thickness t0 is substantially equal to the sheet thickness of the starting material M before shaping. The sheet thickness t0 is measured in a portion that is a center portion of the top plate 111, and that has a flat shape. The sheet thickness t0 is, for example, the sheet thickness of the top plate 111 measured at a position that is distant from the ridgeline portion 14 or the longitudinal end of the top plate 111 by 5.0 mm or more. When the top plate 111 is provided with a step height, a ridge, or a through-hole, the sheet thickness of the top plate 111 measured at a position that is not only distant from the ridgeline portion 14 and the longitudinal end of the top plate 111, but also from the step height, the ridge, and the through-hole by 5.0 mm or more is used as the sheet thickness t0. The sheet thickness t0 is, for example, 1.0 mm or more to 5.0 mm or less.

In the edge 132a of each vertical flange part 132, the length of the modification region R1 is 2.0 times or more to 6.0 times or less of the sheet thickness t0 of the top plate 111.

[Effects]

In the present embodiment, the structural member 10 is shaped from the starting material M, by using the first lower die 21 for shaping the member body 11 and the first flanges 12, and the second lower die 22 for shaping the second flange 13. In the first step of shaping, while the starting material M is sandwiched between the upper dies 23 and the pad 24, and the first lower die 21, the starting material M is not sandwiched between the upper dies 23 and the pad 24, and the second lower die 22. That is, the portion of the starting material M that will become the second flange 13 is not restrained by the die 20 until the middle of shaping. Accordingly, a flow of material occurs in the portion of the starting material M that will become the second flange 13. The material mainly flows from the horizontal flange part 131 to the vertical flange parts 132. Therefore, it is possible to suppress the generation of a crack in the edge 132a of each vertical flange part 132, and in the connecting portions (corner portions) between the vertical flange parts 132 and the first flanges 12.

In the present embodiment, after pressing the starting material M by the pad 24 in the first step of shaping, the starting material M is sandwiched by the upper dies 23 and the first lower die 21. That is, the shaping of the starting material M by the upper dies 23 and the first lower die 21 is performed in the state where the starting material M on the top surface 211a of the first lower die 21 is pressed by the pad 24. Additionally, the shaping of the second flange 13 in the second step of shaping is also performed in the state where the starting material M is pressed by the pad 24. Accordingly, when shaping the starting material M into the structural member 10, the misalignment of the starting material M can be prevented from occurring. Therefore, the structural member 10 can be shaped with high precision.

In the present embodiment, in the state before starting the shaping of the starting material M, the step height exists between the shaping surface 211 of the first lower die 21 and the shaping surface 221 of the second lower die 22. It is preferable that the size S of this step height is set to the sheet thickness of the starting material M or more to 5.0 times or less the sheet thickness. Accordingly, it is possible to suppress the generation of a crack and wrinkles in the second flange 13 and its vicinity.

In the structural member 10 according to the present embodiment, each vertical flange part 132 of the second flange 13 has the modification region R1 that satisfies the above-described Formula (1) in the edge 132a. The length of the modification region R1 is 2.0 times or more to 6.0 times or less the sheet thickness t0 of the top plate 111 of the member body 11. This means that the sheet thickness distribution of the edge 132a of each vertical flange part 132 is uniform. In this case, at the time of use of the structural member 10, the stress concentration to the sheet thickness reduction portion in the edge 132a of the vertical flange part 132 is less likely to occur, and it is possible to suppress the generation of a crack in the edge 132a of the vertical flange part 132. That is, the structural member 10 can have an excellent durability.

In the producing method according to the present embodiment, the shaping step may be a cold shaping step, or may be a hot shaping step (hot stamping). When shaping the structural member 10 from the starting material M with hot stamping, the producing method according to the present embodiment further includes a heating step of heating the starting material M. In the shaping step, the starting material M heated to a temperature suitable for hot stamping in the heating step may be shaped into the structural member 10 with the die 20. The structural member 10 after shaping is heat-extracted (quenched) by contacting with the die 20. Therefore, the strength of the structural member 10 can be increased.

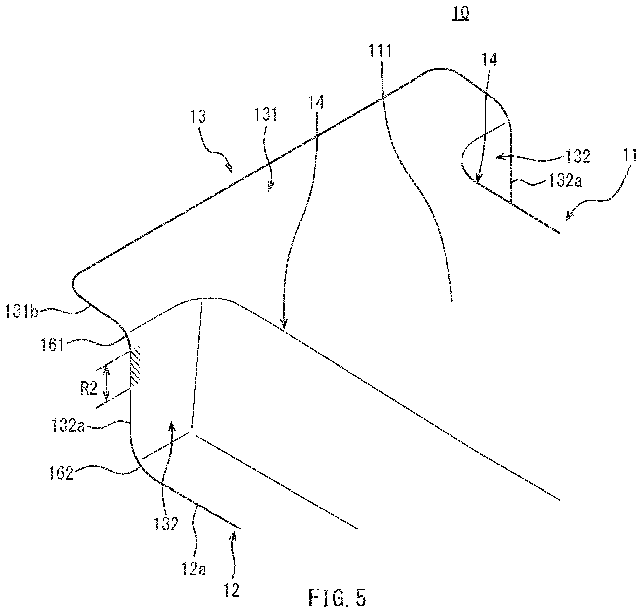

Referring to FIG. 5, when the starting material M is shaped into the structural member 10 with hot stamping, the edge 132a of each vertical flange part 132 includes a low hardness region R2. The low hardness region R2 is in the range from the R stop (on the vertical flange part 132 side) of the connection edge 161 that connects the horizontal flange part 131 and the vertical flange part 132, to the R stop of the connection edge 162 (on the vertical flange part 132 side) that connects the vertical flange part 132 and the first flange 12.

The low hardness region R2 is a region in the edge 132a of each vertical flange part 132 that has lower hardness than other locations. The entire low hardness region R2 has a Vickers hardness HV [HV] that satisfies the following Formula (2). $HV_{Tmax}$ [HV] in Formula (2) is the Vickers hardness of a portion that has the maximum value Tmax of the above-described sheet thickness reduction rate in the edge 132a of each vertical flange part 132. In the edge 132a of each vertical flange part 132, the length of the low hardness region R2 is 5.0 times or more to 10.0 times or less the sheet thickness t0 of the top plate 111.

$$HV_{Tmax} - 10.0 \leq HV \leq HV_{Tmax} + 10.0 \quad (2)$$

The Vickers hardness of the edge 132a of each vertical flange part 132 can be examined as follows. That is, first, a portion including the side edge 131b of the horizontal flange part 131, the connection edge 161, and the edge 132a of the vertical flange part 132 is sampled from the structural member 10 with laser cutting. Further, the sampled portion is cut with an underwater cutter, resin embedding and polishing are performed so that an end surface (the side edge 131b of the horizontal flange part 131, the connection edge 161, and the edge 132a of the vertical flange part 132) of the structural member 10 is arranged on a surface, and a test specimen for hardness examination is made. Then, a Vickers hardness test is performed according to JIS Z 2244 by using this test specimen and a commercially available measuring instrument (full automatic Vickers hardness tester HV-100, made by Mitutoyo Corporation). The Vickers hardness is measured by, for example, setting the test force to 294.2 N (the numerical value of HV30), and the holding time of the test force to 15 s.

In the producing method according to the present embodiment, when a steel sheet is used, and the shaping step is hot stamping, the low hardness region R2 is generated in the edge 132a of each vertical flange part 132. The length of the low hardness region R2 is 5.0 times or more to 10.0 times or less the sheet thickness t0 of the top plate 111 of the member body 11. This means that the hardness distribution of the edge 132a of each vertical flange part 132 is uniform. In this case, at the time of use of the structural member 10, the stress concentration in the edge 132a of each vertical flange part 132 is less likely to occur, and it is possible to suppress the generation of a crack. That is, the structural member 10 can have an excellent durability.

When the starting material M is shaped into the structural member 10 with hot stamping, the strength of each vertical flange part 132 is uniformly increased. For example, the average value of the Vickers hardness in a surface of each vertical flange part 132 becomes 300.0 Hv or more, and the standard deviation becomes 70.0 Hv or less. The average value and standard deviation of the Vickers hardness in the surface of the vertical flange part 132 can be obtained as follows. That is, the surface of the vertical flange part 132 sampled from the structural member 10 is used as a test surface, and Vickers test specified by JIS Z 2244 is performed by using a commercially available measuring instrument on arbitrary 30 locations that are distant from each other in this test surface by the sheet thickness t0 of the top plate 111 or more. The Vickers hardness of the surface of the vertical flange part 132 is measured by, for example, setting the test force to 10 kgf (98.07 N), and the holding time of the test force to 10 s. Then, the average value and standard deviation of them can be calculated from the Vickers hardness obtained by the Vickers test.

With the producing method according to the present embodiment, when shaping the starting material M into the structural member 10, it is possible to suppress the generation of a crack and wrinkles in the second flange 13 and its vicinity. Therefore, a high-tensile steel sheet can be employed as a material of the structural member 10. For example, the structural member 10 can be formed from a steel sheet having a tensile strength of 590 MPa or more. The tensile strength of a steel sheet may be 780 MPa or more, or may be 980 MPa or more. When producing the structural member 10 with hot stamping, the tensile strength of a steel sheet can also be set to 1000 MPa or more, or 2000 MPa or more. Since the strength of the structural member 10 can be improved by employing a high-tensile steel sheet as described above, the thickness of the structural member 10 can be reduced. Thus, the weight of the structural member 10 can be reduced. Note that, when the shaping step of a steel sheet is hot stamping, the tensile strength of the aforementioned low hardness region R2 is also 1000 MPa or more.

In the structural member 10 according to the present embodiment, the corner portion 141 of the ridgeline portion 14 has a curvature radius of, for example, 20.0 mm or less, when seen along a direction perpendicular to the top plate 111. Additionally, the corner portion between the vertical flange part 132 and the vertical wall 112 also has a curvature radius of, for example, 20.0 mm or less. Therefore, the structural member 10 is a member that has an excellent space efficiency. More specifically, since the curvature radii of these corner portions are relatively as small as 20.0 mm or less, the vertical flange part 132 is compactly arranged at right angle or an angle close to right angle with respect to the vertical wall 112, and thus it becomes possible to arrange the structural member 10 in a narrow region. Thus, the size of the structural member 10 is less constrained due to spatial arrangement with other components. Additionally, when a load in the longitudinal direction is input to the structural member 10 arranged in a narrow region, the vertical flange parts 132 can receive the load on their surfaces, and the load is easily transmitted from the vertical flange parts 132 to the member body 11. Accordingly, the structural member 10 can exhibit good transfer ability for a load in the longitudinal direction.

<Second Embodiment>

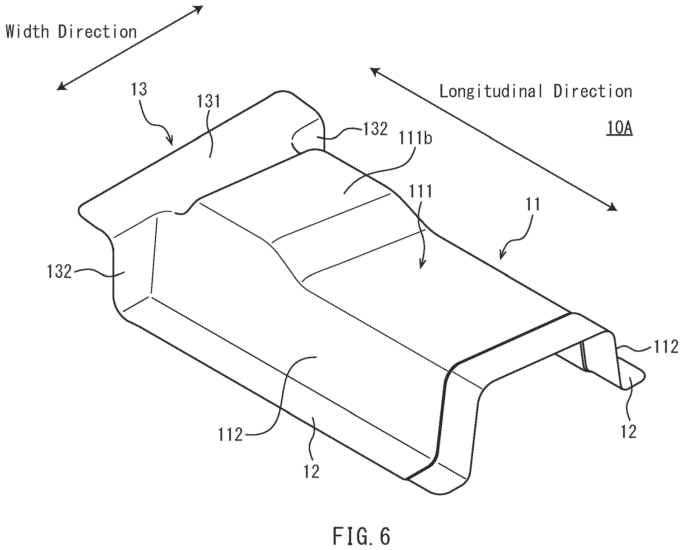

FIG. 6 is a perspective view of the structural member 10A according to a second embodiment. The basic configuration of a structural member 10A according to the present embodiment is the same as the configuration of the structural member 10 according to the first embodiment. However, the structural member 10A is different from the structural member 10 according to the first embodiment in the shape of the top plate 111 of the member body 11.

As illustrated in FIG. 6, in the top plate 111, a portion 111b in the vicinity of the second flange 13 is raised upward compared with the other portions. Additionally, the portion 111b of the top plate 111 in the vicinity of the second flange 13 is raised upward compared with the horizontal flange part 131 of the second flange 13. The height of the vertical wall 112 is changed according to the shape of the top plate 111.

The structural member 10A according to the present embodiment can also be produced with the producing method described in the first embodiment. When producing the structural member 10A, a preshaping step of shaping an intermediate shaped product from a metal sheet (blank) may be performed before the shaping step. In the preshaping step, the intermediate shaped product is shaped from the metal sheet with, for example, drawing. In the intermediate shaped product, for example, the raised portion 111b may be formed in the top plate 111. In the intermediate shaped product, the shape of the second flange 13 may be gently formed. The preshaping step is typically performed cold. The shaping step after the preshaping step may be a cold shaping step, or may be a hot shaping step (hot stamping).

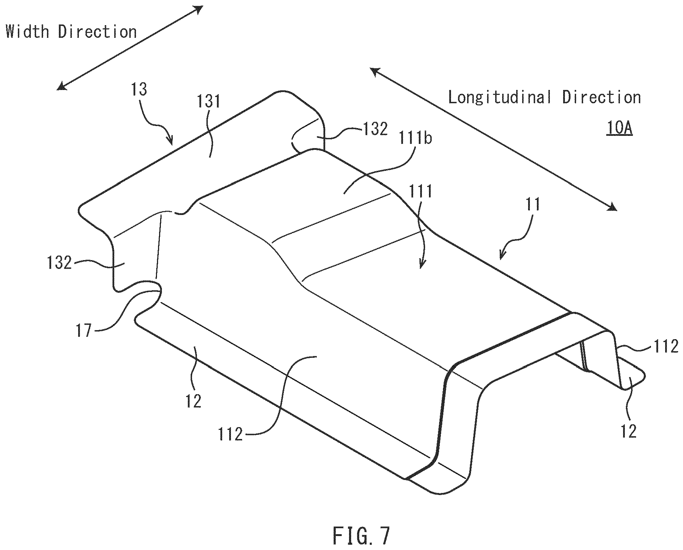

As illustrated in FIG. 7, the structural member 10A may have, for example, a notch 17 in the connecting portion between the vertical flange part 132 of the second flange 13 and the first flange 12. The notch 17 may be provided only on one side of the structural member 10A in the width direction, or may be provided on both sides in the width direction. The notch 17 can be formed in advance in a starting material before the starting material is shaped into the structural member 10A. Although illustration is omitted, the structural member 10 (FIG. 1 and FIG. 2) according to the first embodiment can also have the notch 17.

However, in order to make stress concentration less likely at the time of use of the structural members 10, 10A, it is preferable that the first flanges 12 and the second flange 13 do not have a notch. That is, it is preferable that the edge 12a of the first flange 12, the edge 132a of the vertical flange part 132, and the side edge 131b of the horizontal flange part 131 are smoothly continuous. In this case, in addition to suppression of stress concentration, the load transfer abilities of the structural members 10, 10A in the event of an automobile collision can be improved. Additionally, when the structural members 10, 10A are provided in a bottom surface of a floor panel, it is possible to prevent water from entering the structural members 10, 10A through the notch, and rusting of the structural members 10, 10A can be suppressed.

Although the embodiments according to the present disclosure have been described above, the present disclosure is not limited to the above-described embodiments, and various modifications can be made as long as the modifications do not depart from the spirit of the present disclosure.

For example, in the above-described embodiment, the second flange 13 is provided only in the one longitudinal end of the member body 11. However, the second flanges 13 may be provided in both longitudinal ends of the member body 11. In this case, when producing the structural member, two second lower dies 22 for shaping the second flange 13 may be prepared, and these second lower dies 22 may be arranged on both sides of the first lower die 21. The shape of the upper die 23 may be appropriately changed so as to correspond to the first lower die 21 and the two second lower dies 22.

When a structural member having the second flanges 13 on both longitudinal ends of the member body 11 is shaped, this structural member can also be divided into two after the shaping step. Accordingly, two structural members 10 or 10A that have the second flange 13 only in one longitudinal end of the member body 11 can be produced in one shaping step.

In the above-described embodiment, the pad 24 has a substantially T shape in plan view of the die 20. In other words, at the time of shaping of the structural member 10, the pad 24 is configured to be able to press the top plate 111 and the horizontal flange part 131 almost entirely. However, the shape of the pad 24 is not limited to this. The portion of the structural members 10 pressed by the pad 24 at the time of shaping can be appropriately changed.

In the above-described embodiment, the second lower die 22 is supported by the cushion mechanism 25 so as to be movable up and down. However, the second lower die 22 does not necessarily have to be supported by the cushion mechanism 25.

In the above-described embodiment, before starting the shaping step, the shaping surface 211 of the first lower die 21 is located above the shaping surface 221 of the second lower die 22, and the step height exists between the shaping surface 211 of the first lower die 21 and the shaping surface 221 of the second lower die 22. However, the positional relationship between the first lower die 21 and the second lower die 22 is not particularly limited to this. The lower dies 21 and 22 may be arranged so that the first lower die 21 sandwiches the starting material M with the upper dies 23 before the second lower die 22. For example, in an initial state, the second lower die 22 may be separated from the first lower die 21 in the longitudinal direction of the die 20 so that, in the first step of shaping, the upper dies 23 and the second lower die 22 will not sandwich the starting material M.

In the above-described embodiment, the upper dies 23 are arranged above the lower dies 21 and 22 in the state where the die 20 is attached to the pressing machine. Additionally, when shaping the starting material M into the structural member 10 or 10A, the upper dies 23 and the lower dies 21 and 22 are brought closer to each other by moving the upper dies 23 toward the lower dies 21 and 22. However, contrary to the above-described embodiment, the upper dies 23 may be arranged under the lower dies 21 and 22. Additionally, the upper dies 23 may be moved relatively closer to the lower dies 21 and 22 by moving the lower dies 21 and 22 toward the upper dies 23.

EXAMPLES

Hereinafter, the present disclosure will be described in more detail by using examples. However, the present disclosure is not limited to the following examples.

In order to confirm the effects of the present disclosure, CAE analysis was performed on the press-shaping that shapes the structural member 10 (FIG. 1 and FIG. 2) with the producing method according to the above-described embodiment, by using commercially available software (press-shaping simulation system JSTAMP ver2.18, made by JSOL Corporation, and LS-DYNA ver971 rev7.12, made by ANSYS, Inc.). The conditions and results of the analysis are illustrated in Table 1-1, Table 1-2, Table 2-1, and Table 2-2.

[Table 1-1]

TABLE 1-1

| | Type of starting material | Starting material (standard symbol, etc.) | Plating type | Sheet thickness t [mm] | Ridgeline R [mm] | Corner R [mm] | Flange length [mm] | Step height S [mm] | S/t |
|---|---|---|---|---|---|---|---|---|---|
| Example 1 | Steel sheet | 590 MPa grade cold-rolled steel sheet (SPFC590Y) | None | 2.0 | 10.0 | 10.0 | 17.0 | 4.0 | 2.0 |
| Example 2 | Steel sheet | 980 MPa grade cold-rolled steel sheet (SPFC980Y) | None | 1.2 | 14.0 | 15.0 | 17.0 | 2.4 | 2.0 |
| Example 3 | Steel sheet | 590 MPa grade hot-rolled steel sheet (SPFH590Y) | None | 2.0 | 10.0 | 10.0 | 17.0 | 5.2 | 2.6 |
| Comparative Example 1 | Steel sheet | 590 MPa grade hot-rolled steel sheet (SPFH590Y) | None | 2.0 | 10.0 | 15.0 | 20.0 | 0.0 | 0.0 |
| Comparative Example 2 | Steel sheet | 590 MPa grade hot-rolled steel sheet (SPFH590Y) | None | 2.0 | 10.0 | 15.0 | 20.0 | 1.0 | 0.5 |
| Example 4 | Steel sheet | 590 MPa grade hot-rolled steel sheet (SPFH590Y) | None | 2.0 | 10.0 | 15.0 | 20.0 | 2.0 | 1.0 |
| Example 5 | Steel sheet | 590 MPa grade hot-rolled steel sheet (SPFH590Y) | None | 2.0 | 10.0 | 15.0 | 20.0 | 8.0 | 4.0 |
| Example 6 | Steel sheet | 590 MPa grade hot-rolled steel sheet (SPFH590Y) | None | 2.0 | 10.0 | 15.0 | 20.0 | 10.0 | 5.0 |
| Example 7 | Steel sheet | 590 MPa grade hot-rolled steel sheet (SPFH590Y) | None | 2.0 | 10.0 | 15.0 | 20.0 | 12.0 | 6.0 |
| Example 8 | Steel sheet | 590 MPa grade hot-rolled steel sheet (SPFH590Y) | None | 2.0 | 10.0 | 15.0 | 25.0 | 8.0 | 4.0 |
| Example 9 | Steel sheet | 590 MPa grade hot-rolled steel sheet (-) | GA (alloyed zinc plating) | 3.5 | 12.0 | 15.0 | 20.0 | 7.0 | 2.0 |
| Example 10 | Steel sheet | 590 MPa grade cold-rolled steel sheet (SPFC590Y) | GA (alloyed zinc plating) | 1.6 | 6.0 | 20.0 | 20.0 | 3.2 | 2.0 |
| Example 11 | Steel sheet | 980 MPa grade hot-rolled steel sheet (highly shapable SF material) | None | 2.0 | 8.0 | 15.0 | 20.0 | 4.0 | 2.0 |

(continued)

| | Type of starting material | Starting material (standard symbol, etc.) | Plating type | Sheet thickness t [mm] | Ridgeline R [mm] | Corner R [mm] | Flange length [mm] | Step height S [mm] | S/t |
|---|---|---|---|---|---|---|---|---|---|
| Example 12 | Steel sheet | 980 MPa grade hot-rolled steel sheet (highly shapable SF material) | None | 2.0 | 5.0 | 15.0 | 20.0 | 3.0 | 1.5 |
| Example 13 | Steel sheet | 980 MPa grade hot-rolled steel sheet (-) | GA (alloyed zinc plating) | 1.8 | 15.0 | 25.0 | 20.0 | 3.6 | 2.0 |
| Example 14 | Steel sheet | 1.2 GPa grade hot stamping steel sheet (-) | None | 2.3 | 10.0 | 15.0 | 16.0 | 4.6 | 2.0 |
| Example 15 | Steel sheet | 1.5 GPa grade hot stamping steel sheet (-) | None | 1.8 | 10.0 | 10.0 | 00 | 3.6 | 2.0 |
| Example 16 | Steel sheet | 2.0 GPa grade hot stamping steel sheet (-) | None | 1.4 | 10.0 | 12.0 | 20.0 | 2.8 | 2.0 |
| Example 17 | Steel sheet | 1.5 GPa grade hot stamping steel sheet (-) | GA (alloyed zinc plating) | 2.0 | 10.0 | 14.0 | 20.0 | 4.0 | 2.0 |
| Comparative Example 3 | Steel sheet | 2.0 GPa grade hot stamping steel sheet (-) | GA (alloyed zinc plating) | 2.0 | 10.0 | 14.0 | 00 | 00 | 0.0 |
| Comparative Example 4 | Steel sheet | 2.0 GPa grade hot stamping steel sheet (-) | GA (alloyed zinc plating) | 2.0 | 10.0 | 14.0 | 10.0 | 1.0 | 0.5 |
| Comparative Example 5 | Steel sheet | 2.0 GPa grade hot stamping steel sheet (-) | GA (alloyed zinc plating) | 2.0 | 10.0 | 14.0 | 20.0 | 0.0 | 0.0 |
| Example 18 | Steel sheet | 1.5 GPa grade hot stamping steel sheet (-) | GA (alloyed zinc plating) | 2.0 | 10.0 | 14.0 | 20.0 | 2.0 | 1.0 |
| Example 19 | Steel sheet | 1.5 GPa grade hot stamping steel sheet (-) | GA (alloyed zinc plating) | 2.0 | 10.0 | 14.0 | 20.0 | 4.0 | 2.0 |
| Example 20 | Steel sheet | 1.5 GPa grade hot stamping steel sheet (-) | GA (alloyed zinc plating) | 2.0 | 10.0 | 14.0 | 20.0 | 10.0 | 5.0 |
| Example 21 | Steel sheet | 2.0 GPa grade hot stamping steel sheet (-) | GA (alloyed zinc plating) | 1.5 | 10.0 | 14.0 | 20.0 | 7.5 | 5.0 |
| Example 22 | Steel sheet | 2.0 GPa grade hot stamping steel sheet (-) | GA (alloyed zinc plating) | 1.5 | 10.0 | 14.0 | 20.0 | 10.0 | 6.7 |

(continued)

| | Type of starting material | Starting material (standard symbol, etc.) | Plating type | Sheet thickness t [mm] | Ridgeline R [mm] | Corner R [mm] | Flange length [mm] | Step height S [mm] | S/t |
|---|---|---|---|---|---|---|---|---|---|
| Example 23 | Steel sheet | 1.2 GPa grade hot stamping steel sheet (-) | Al-Si (aluminum plating) | 3.0 | 8.0 | 14.0 | 25.0 | 6.0 | 2.0 |
| Example 24 | Steel sheet | 2.0 GPa grade hot stamping steel sheet (-) | Al-Si (aluminum plating) | 2.0 | 6.0 | 12.0 | 25.0 | 4.0 | 2.0 |
| Example 25 | Steel sheet | 2.5 GPa grade hot stamping steel sheet (-) | None | 1.0 | 10.0 | 14.0 | 20.0 | 2.0 | 2.0 |
| Example 26 | Aluminum alloy sheet | 6000 series aluminum (6022) | None | 1.5 | 6.0 | 20.0 | 15.0 | 3.0 | 2.0 |
| Example 27 | Aluminum alloy sheet | 6000 series aluminum (6022) | None | 3.0 | 6.0 | 15.0 | 20.0 | 6.0 | 2.0 |
| Comparative Example 6 | Aluminum alloy sheet | 6000 series aluminum (6022) | None | 3.0 | 6.0 | 15.0 | 20.0 | 2.0 | 0.7 |
| Example 28 | Aluminum alloy sheet | 6000 series aluminum (6022) | None | 3.0 | 6.0 | 12.0 | 20.0 | 3.0 | 1.0 |
| Example 29 | Aluminum alloy sheet | 6000 series aluminum (6022) | None | 3.0 | 6.0 | 15.0 | 20.0 | 15.0 | 5.0 |
| Example 30 | Aluminum alloy sheet | 6000 series aluminum (6022) | None | 3.0 | 6.0 | 15.0 | 20.0 | 20.0 | 6.7 |
| Example 31 | Aluminum alloy sheet | 6000 series aluminum (6022) | None | 5.0 | 12.0 | 12.0 | 25.0 | 10.0 | 2.0 |
| Example 32 | Steel sheet | 1.5 GPa grade hot stamping steel sheet (-) | None | 1.8 | 10.0 | 10.0 | 15.0 | 4.0 | 2.2 |
| Example 33 | Steel sheet | 2.0 GPa grade hot stamping steel sheet (-) | None | 1.4 | 10.0 | 12.0 | 20.0 | 4.0 | 2.9 |
| Example 34 | Steel sheet | 2.0 GPa grade hot stamping steel sheet (-) | None | 2.0 | 10.0 | 12.0 | 20.0 | 3.0 | 1.5 |
| Example 35 | Steel sheet | 2.0 GPa grade hot stamping steel sheet (-) | None | 2.0 | 10.0 | 12.0 | 20.0 | 4.0 | 2.0 |

| | Type of starting material | Starting material (standard symbol, etc.) | Plating type | Sheet thickness t [mm] | Ridgeline R [mm] | Corner R [mm] | Flange length [mm] | Step height S [mm] | S/t |
|---|---|---|---|---|---|---|---|---|---|
| Example 36 | Steel sheet | 2.0 GPa grade hot stamping steel sheet (-) | None | 2.0 | 10.0 | 12.0 | 20.0 | 6.0 | 3.0 |
| Example 37 | Steel sheet | 2.0 GPa grade hot stamping steel sheet (-) | None | 2.0 | 10.0 | 12.0 | 20.0 | 10.0 | 5.0 |
| Example 38 | Steel sheet | 1.5 GPa grade hot stamping steel sheet (-) | GA (alloyed zinc plating) | 2.0 | 10.0 | 14.0 | 20.0 | 4.0 | 2.0 |
| Example 39 | Steel sheet | 1.5 GPa grade hot stamping steel sheet (-) | GA (alloyed zinc plating) | 2.0 | 10.0 | 14.0 | 20.0 | 6.0 | 3.0 |
| Example 40 | Steel sheet | 2.0 GPa grade hot stamping steel sheet (-) | GA (alloyed zinc plating) | 1.5 | 10.0 | 14.0 | 20.0 | 5.0 | 3.3 |
| Example 41 | Steel sheet | 1.5 GPa grade hot stamping steel sheet (-) | Al-Si (aluminum plating) | 2.0 | 10.0 | 14.0 | 20.0 | 4.0 | 2.0 |
| Example 42 | Steel sheet | 0.5 GPa grade hot stamping steel sheet (-) | Al-Si (aluminum plating) | 1.8 | 10.0 | 14.0 | 25.0 | 5.0 | 2.8 |
| Example 43 | Steel sheet | 1.3 GPa grade hot stamping steel sheet (-) | Al-Si (aluminum plating) | 1.8 | 10.0 | 14.0 | 25.0 | 5.0 | 2.8 |
| Example 44 | Steel sheet | 2.0 GPa grade hot stamping steel sheet (-) | Al-Si (aluminum plating) | 2.0 | 10.0 | 14.0 | 25.0 | 4.0 | 2.0 |
| Example 45 | Steel sheet | 2.0 GPa grade hot stamping steel sheet (-) | Al-Si (aluminum plating) | 1.6 | 10.0 | 14.0 | 25.0 | 3.0 | 1.9 |
| Example 46 | Steel sheet | 2.5 GPa grade hot stamping steel sheet (-) | None | 1.0 | 10.0 | 14.0 | 20.0 | 2.0 | 2.0 |
| Example 47 | Steel sheet | 2.5 GPa grade hot stamping steel sheet (-) | None | 1.5 | 10.0 | 14.0 | 20.0 | 2.0 | 1.3 |
| Example 48 | Steel sheet | 2.5 GPa grade hot stamping steel sheet (-) | None | 1.5 | 10.0 | 14.0 | 20.0 | 4.0 | 2.7 |

EP 4 397 423 A1

17

[Table 1-2]

TABLE 1-2

| | Type of starting material | Starting material (standard symbol, etc.) | Plating type | Maximum sheet thickness reduction rate Tmax | Modification region R1 [mm] | R1/t | Cracking | Wrinkles |
|---|---|---|---|---|---|---|---|---|
| Example 1 | Steel sheet | 590 MPa grade cold-rolled steel sheet (SPFC590Y) | None | 15% | 8.0 | 4.0 | None | None |
| Example 2 | Steel sheet | 980 MPa grade cold-rolled steel sheet (SPFC980Y) | None | 12% | 5.0 | 4.2 | None | None |
| Example 3 | Steel sheet | 590 MPa grade hot-rolled steel sheet (SPFH590Y) | None | 16% | 6.0 | 3.0 | None | None |
| Comparative Example 1 | Steel sheet | 590 MPa grade hot-rolled steel sheet (SPFH590Y) | None | 19% | 2.0 | 1.0 | Yes | None |
| Comparative Example 2 | Steel sheet | 590 MPa grade hot-rolled steel sheet (SPFH590Y) | None | 18% | 3.0 | 1.5 | Yes | None |
| Example 4 | Steel sheet | 590 MPa grade hot-rolled steel sheet (SPFH590Y) | None | 17% | 4.0 | 2.0 | None | None |
| Example 5 | Steel sheet | 590 MPa grade hot-rolled steel sheet (SPFH590Y) | None | 15% | 8.0 | 4.0 | None | None |
| Example 6 | Steel sheet | 590 MPa grade hot-rolled steel sheet (SPFH590Y) | None | 17% | 6.0 | 3.0 | None | None |
| Example 7 | Steel sheet | 590 MPa grade hot-rolled steel sheet (SPFH590Y) | None | 18% | 6.0 | 3.0 | None | Yes |
| Example 8 | Steel sheet | 590 MPa grade hot-rolled steel sheet (SPFH590Y) | None | 17% | 9.0 | 4.5 | None | None |
| Example 9 | Steel sheet | 590 MPa grade hot-rolled steel sheet (-) | GA (alloyed zinc plating) | 15% | 12.0 | 3.4 | None | None |
| Example 10 | Steel sheet | 590 MPa grade cold-rolled steel sheet (SPFC590Y) | GA (alloyed zinc plating) | 17% | 8.0 | 5.0 | None | None |
| Example 11 | Steel sheet | 980 MPa grade hot-rolled steel sheet (highly shapable SF material) | None | 18% | 9.0 | 4.5 | None | None |

(continued)

| | Type of starting material | Starting material (standard symbol, etc.) | Plating type | Maximum sheet thickness reduction rate Tmax | Modification region R1 [mm] | R1/t | Cracking | Wrinkles |
|---|---|---|---|---|---|---|---|---|
| Example 12 | Steel sheet | 980 MPa grade hot-rolled steel sheet (highly shapable SF material) | None | 17% | 8.0 | 4.0 | None | None |
| Example 13 | Steel sheet | 980 MPa grade hot-rolled steel sheet (-) | GA (alloyed zinc plating) | 14% | 8.0 | 4.4 | None | None |
| Example 14 | Steel sheet | 1.2 GPa grade hot stamping steel sheet (-) | None | 16% | 10.0 | 4.3 | None | None |
| Example 15 | Steel sheet | 1.5 GPa grade hot stamping steel sheet (-) | None | 15% | 8.5 | 4.7 | None | None |
| Example 16 | Steel sheet | 2.0 GPa grade hot stamping steel sheet (-) | None | 17% | 6.0 | 4.3 | None | None |
| Example 17 | Steel sheet | 1.5 GPa grade hot stamping steel sheet (-) | GA (alloyed zinc plating) | 16% | 10.0 | 5.0 | None | None |
| Comparative Example 3 | Steel sheet | 2.0 GPa grade hot stamping steel sheet (-) | GA (alloyed zinc plating) | 23% | 2.0 | 1.0 | Yes | None |
| Comparative Example 4 | Steel sheet | 2.0 GPa grade hot stamping steel sheet (-) | GA (alloyed zinc plating) | 22% | 3.0 | 1.5 | Yes | None |
| Comparative Example 5 | Steel sheet | 2.0 GPa grade hot stamping steel sheet (-) | GA (alloyed zinc plating) | 25% | 3.0 | 1.5 | Yes | None |
| Example 18 | Steel sheet | 1.5 GPa grade hot stamping steel sheet (-) | GA (alloyed zinc plating) | 20% | 10.0 | 5.0 | None | None |
| Example 19 | Steel sheet | 1.5 GPa grade hot stamping steel sheet (-) | GA (alloyed zinc plating) | 16% | 12.0 | 6.0 | None | None |
| Example 20 | Steel sheet | 1.5 GPa grade hot stamping steel sheet (-) | GA (alloyed zinc plating) | 20% | 8.0 | 4.0 | None | None |
| Example 21 | Steel sheet | 2.0 GPa grade hot stamping steel sheet (-) | GA (alloyed zinc plating) | 20% | 8.0 | 5.3 | None | None |

(continued)

| | Type of starting material | Starting material (standard symbol, etc.) | Plating type | Maximum sheet thickness reduction rate Tmax | Modification region R1 [mm] | R1/t | Cracking | Wrinkles |
|---|---|---|---|---|---|---|---|---|
| Example 22 | Steel sheet | 2.0 GPa grade hot stamping steel sheet (-) | GA (alloyed zinc plating) | 20% | 7.0 | 4.7 | None | Yes |
| Example 23 | Steel sheet | 1.2 GPa grade hot stamping steel sheet (-) | Al-Si (aluminum plating) | 16% | 12.0 | 4.0 | None | None |
| Example 24 | Steel sheet | 2.0 GPa grade hot stamping steel sheet (-) | Al-Si (aluminum plating) | 16% | 10.0 | 5.0 | None | None |
| Example 25 | Steel sheet | 2.5 GPa grade hot stamping steel sheet (-) | None | 15% | 6.0 | 6.0 | None | None |
| Example 26 | Aluminum alloy sheet | 6000 series aluminum (6022) | None | 21% | 6.0 | 4.0 | None | None |
| Example 27 | Aluminum alloy sheet | 6000 series aluminum (6022) | None | 20% | 12.0 | 4.0 | None | None |
| Comparative Example 6 | Aluminum alloy sheet | 6000 series aluminum (6022) | None | 27% | 3.0 | 1.0 | Yes | None |
| Example 28 | Aluminum alloy sheet | 6000 series aluminum (6022) | None | 19% | 12.0 | 4.0 | None | None |
| Example 29 | Aluminum alloy sheet | 6000 series aluminum (6022) | None | 19% | 10.0 | 3.3 | None | None |
| Example 30 | Aluminum alloy sheet | 6000 series aluminum (6022) | None | 20% | 10.0 | 3.3 | None | Yes |
| Example 31 | Aluminum alloy sheet | 6000 series aluminum (6022) | None | 18% | 12.0 | 2.4 | None | None |
| Example 32 | Steel sheet | 1.5 GPa grade hot stamping steel sheet (-) | None | 17% | 8.0 | 4.4 | None | None |
| Example 33 | Steel sheet | 2.0 GPa grade hot stamping steel sheet (-) | None | 18% | 6.0 | 4.3 | None | None |
| Example 34 | Steel sheet | 2.0 GPa grade hot stamping steel sheet (-) | None | 17% | 9.0 | 4.5 | None | None |

(continued)

| | Type of starting material | Starting material (standard symbol, etc.) | Plating type | Maximum sheet thickness reduction rate Tmax | Modification region R1 [mm] | R1/t | Cracking | Wrinkles |
|---|---|---|---|---|---|---|---|---|
| Example 35 | Steel sheet | 2.0 GPa grade hot stamping steel sheet (-) | None | 16% | 10.0 | 5.0 | None | None |
| Example 36 | Steel sheet | 2.0 GPa grade hot stamping steel sheet (-) | None | 18% | 8.0 | 4.0 | None | None |
| Example 37 | Steel sheet | 2.0 GPa grade hot stamping steel sheet (-) | None | 20% | 6.0 | 3.0 | None | None |
| Example 38 | Steel sheet | 1.5 GPa grade hot stamping steel sheet (-) | GA (alloyed zinc plating) | 16% | 12.0 | 6.0 | None | None |
| Example 39 | Steel sheet | 1.5 GPa grade hot stamping steel sheet (-) | GA (alloyed zinc plating) | 18% | 8.0 | 4.0 | None | None |
| Example 40 | Steel sheet | 2.0 GPa grade hot stamping steel sheet (-) | GA (alloyed zinc plating) | 19% | 8.0 | 5.3 | None | None |
| Example 41 | Steel sheet | 1.5 GPa grade hot stamping steel sheet (-) | Al-Si (aluminum plating) | 16% | 8.0 | 4.0 | None | None |
| Example 42 | Steel sheet | 0.5 GPa grade hot stamping steel sheet (-) | Al-Si (aluminum plating) | 19% | 9.0 | 5.0 | None | None |
| Example 43 | Steel sheet | 1.3 GPa grade hot stamping steel sheet (-) | Al-Si (aluminum plating) | 17% | 9.0 | 5.0 | None | None |
| Example 44 | Steel sheet | 2.0 GPa grade hot stamping steel sheet (-) | Al-Si (aluminum plating) | 16% | 10.0 | 5.0 | None | None |
| Example 45 | Steel sheet | 2.0 GPa grade hot stamping steel sheet (-) | Al-Si (aluminum plating) | 17% | 8.0 | 5.0 | None | None |
| Example 46 | Steel sheet | 2.5 GPa grade hot stamping steel sheet (-) | None | 15% | 5.0 | 5.0 | None | None |
| Example 47 | Steel sheet | 2.5 GPa grade hot stamping steel sheet (-) | None | 16% | 7.0 | 4.7 | None | None |
| Example 48 | Steel sheet | 2.5 GPa grade hot stamping steel sheet (-) | None | 16% | 7.0 | 4.7 | None | None |

[Table 2-1]

[Table 2-1]

TABLE 2-1

| | Type of starting material | Starting material (standard symbol, etc.) | Plating type | Sheet thickness t [mm] | Ridgeline R [mm] | Corner R [mm] | Flange length [mm] | Step height S [mm] | S/t |
|---|---|---|---|---|---|---|---|---|---|
| Reference Example 1 | Steel sheet | 590 MPa grade hot-rolled steel sheet (SPFH590Y) | None | 2.0 | 10.0 | 15.0 | -20.0 | 0.0 | 00 |
| Reference Example 2 | Steel sheet | 590 MPa grade hot-rolled steel sheet (SPFH590Y) | None | 2.0 | 10.0 | 15.0 | 10.0 | 2.0 | 1.0 |
| Reference Example 3 | Steel sheet | 590 MPa grade hot-rolled steel sheet (SPFH590Y) | None | 2.0 | 10.0 | 15.0 | 50.0 | 0.0 | 00 |
| Reference Example 4 | Aluminum alloy sheet | 6000 series aluminum (6022) | None | 3.0 | 6.0 | 15.0 | -15.0 | 2.0 | 0.7 |
| Reference Example 5 | Steel sheet | 590 MPa grade hot-rolled steel sheet (SPFH590Y) | None | 2.0 | 10.0 | 40.0 | 20.0 | 1.0 | 0.5 |

24

[Table 2-2]

[Table 2-2]

TABLE 2-2

| | Type of starting material | Starting material (standard symbol, etc.) | Plating type | Maximum sheet thickness reduction rate Tmax | Modification region R1 [mm] | R1/t | Cracking | Wrinkles |
|---|---|---|---|---|---|---|---|---|
| Reference Example 1 | Steel sheet | 590 MPa grade hot-rolled steel sheet (SPFH590Y) | None | 17% | 6.0 | 3.0 | None | None |
| Reference Example 2 | Steel sheet | 590 MPa grade hot-rolled steel sheet (SPFH590Y) | None | 16% | 6.0 | 3.0 | None | None |
| Reference Example 3 | Steel sheet | 590 MPa grade hot-rolled steel sheet (SPFH590Y) | None | 16% | 3.0 | 1.5 | None | Yes |
| Reference Example 4 | Aluminum alloy sheet | 6000 series aluminum (6022) | None | 20% | 3.0 | 1.0 | None | None |
| Reference Example 5 | Steel sheet | 590 MPa grade hot-rolled steel sheet (SPFH590Y) | None | 15% | 3.0 | 1.5 | None | None |

Among the examples, Comparative Examples, and Reference Examples in the above-described tables, in cases where a starting material was a steel sheet for hot stamping or an aluminum alloy sheet, hot stamping was used as the shaping method, and cold shaping was used as the shaping method in the other cases. In Examples 1 to 31, each Comparative Example, and each Reference Example, shaping was performed while pressing, by the pad 24, almost the entire portions of a metal sheet that would become the top plate 111 and the horizontal flange part 131, the metal sheet serving as a starting material. On the other hand, in Examples 32 to 48, shaping of the structural member 10 was performed while pressing, by the pad 24, parts of the portions of the metal sheet that would become the top plate 111 and the horizontal flange part 131, the metal sheet serving as a starting material. That is, in Examples 32 to 48, the structural member 10 was shaped by using the pad 24 having a different shape from those in Examples 1 to 31.

In each table, a ridgeline R is the curvature radius of a portion of the ridgeline portion 14 that connects the horizontal flange part 131 and the vertical flange part 132 in member transversal cross sectional view. A corner R is the curvature radius of the corner portion between the vertical flange part 132 and the vertical wall 112. The corner R is approximately equal to the curvature radius of the corner portion 141 in member plan view, which is the portion of the ridgeline portion 14 extending from the top plate 111 to the horizontal flange part 131. The ridgeline R and the corner R are both the curvature radii measured from inside the structural member 10 (the lower dies 21 and 22 side). A flange length is the amount of protrusion of the flanges 12 and 13 from the member body 11, and is the distance from the R stop (outside in the width direction) of the corner portion 141 of the ridgeline portion 14 to an end of the structural member 10 in the width direction.

As illustrated in Table 1, in each example, the size S (FIG. 3D) of the step height between the first lower die 21 and the second lower die 22 was secured to be 1.0 time or more of a sheet thickness t of a metal sheet serving as a starting material. Therefore, in each example, after the starting material was reliably sandwiched by the upper dies 23 and the first lower die 21, sandwiching of the starting material by the upper dies 23 and the second lower die 22 was started, and the second flange 13 was shaped. Thus, in each example, a flow of the material in the second flange 13 was facilitated, and a crack in the second flange 13 did not occur.

In each Comparative Example, the size S of the step height between the first lower die 21 and the second lower die 22 is less than 1.0 time of the sheet thickness t of the starting material. Therefore, in each Comparative Example, before sandwiching of the starting material by the upper dies 23 and the first lower die 21 was completed, sandwiching of the starting material by the upper dies 23 and the second lower die 22 was started. Thus, in each comparative example, a flow of the material in the second flange 13 was less likely to occur, and a crack was generated in the second flange 13.

Accordingly, when the step height is provided in advance between the first lower die 21 and the second lower die 22, by making the size S of the step height to be the sheet thickness of the starting material or more, it is possible to prevent the generation of a crack in the second flange 13 in the shaping step. This effect was confirmed in hot stamping using an aluminum alloy sheet as well as in shaping of a steel sheet.

In Example 7, Example 22, and Example 30, the size S of the step height between the first lower die 21 and the second lower die 22 is more than 5.0 times of the sheet thickness t of the starting material. In Example 7, Example 22, and Example 30, wrinkles were generated in the second flange 13 or its vicinity. On the other hand, in the other examples in which the size S of step height was 5.0 times or less of the sheet thickness t of the starting material, wrinkles were not generated. Accordingly, when the step height is provided in advance between the first lower die 21 and the second lower die 22, by making the size S of the step height to be 5.0 times or less of the sheet thickness of the starting material, it is possible to prevent the generation of wrinkles in the second flange 13 and its vicinity.

Incidentally, a crack in the second flange 13 is easily generated when the flange part does not have a notch, and the flange length is relatively small, or when the corner R is relatively small. For example, when the flange length is 0.0 mm or more to 25.0 mm or less, or when the corner R is 20.0 mm or less, in the edge 132a of the vertical flange part 132, modification is likely to be concentrated in the vicinity of the R stop of the connection edge 161. For example, when the structural member 10 is produced with a conventional construction method that uses a steel sheet having a tensile strength of 590 MPa or more, and shapes the member body 11 and the first flange 12, and the second flange 13 at the same time, a crack is generated in the second flange 13. Therefore, as in Reference Example 1 and Reference Example 4, measures against cracking are required by cutting out the flange part (the flange length is represented as a negative value in Table 2-1). As mentioned above, cutting out the flange part is not desirable, since the stress concentration is likely to occur, and component performance is deteriorated. On the other hand, when the flange length is 50.0 mm or more as in Reference Example 3, or when the corner R is more than 20.0 mm as in Reference Example 5, even if the structural member 10 is shaped with the conventional construction method, a crack in the second flange 13 is less likely to be generated. However, such a shape is not desirable from the viewpoint of restrictions of spaces and increases in components weights. Additionally, even if the flange length is reduced after shaping by cutting the flange part, this is not desirable since the yield will be decreased and the cutting cost will be increased.

Referring to each table, the conditions of Reference Example 1 are the same as the conditions of Comparative Example 1, except for the flange length. While the flange length is a positive value, and a notch is not formed in the flange part in Comparative Example 1, the flange length is -20.0 mm, and a notch is added to the flange part in Reference Example 1. The conditions of Reference Example 4 are the same as the conditions of Comparative Example 6, except for the flange length. While the flange length is a positive value, and a notch is not formed in the flange part in Comparative Example 6, the flange length is -15.0 mm, and a notch is added to the flange part in Reference Example 4. Therefore, unlike Comparative Example 1 and Comparative Example 6, a crack was not generated in the second flange 13 in Reference Example 1 and Reference Example 4.

The conditions of Reference Example 5 are the same as the conditions of Comparative Example 2, except for the corner R. The corner R of Reference Example 5 is 40.0 mm, and is significantly larger than the corner R: 15.0 mm of Comparative Example 2. Therefore, unlike Comparative Example 2, a crack was not generated in the second flange 13 in Reference Example 5.

The producing method according to the present disclosure is a method for suppressing a crack in the second flange 13. Therefore, the producing method according to the present disclosure is preferable for production of the structural member 10 in which a crack is easily generated in the second flange 13, i.e., the structural member 10 in which the flange length is 25.0 mm or less, or the curvature radius of the corner portion 141 of the ridgeline portion 14 and the corner R between the vertical flange part 132 and the vertical wall 112 are 20.0 mm or less. With the producing method according to the present disclosure, even when the curvature radius of the corner portion 141 of the ridgeline portion 14 and the corner R between the vertical flange part 132 and the vertical wall 112 are 20.0 mm or less, a crack in the second flange 13 can be suppressed. Additionally, even when the flange length is 25.0 mm or less, a crack in the second flange 13 can be suppressed. Accordingly, it is unnecessary to suppress cracking at the time of shaping by increasing the flange length in advance, and to trim the flanges 12 and 13 after shaping. That is, the intermediate trimming step of the flanges 12 and 13 becomes unnecessary.

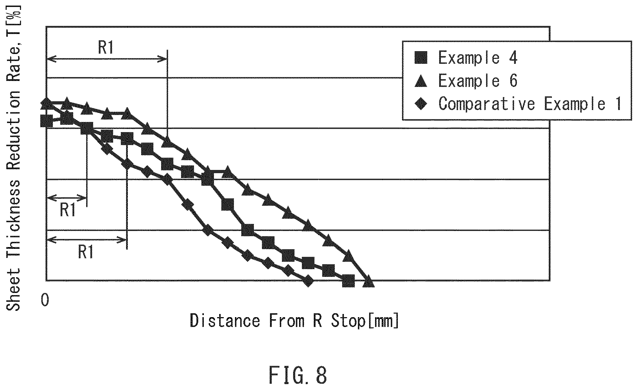

FIG. 8 is a graph illustrating, for the edge 132a of the vertical flange part 132, the relationship between the distance from the R stop (on the vertical flange part 132 side) of the connection edge 161 that connects the horizontal flange part 131 and the vertical flange part 132, and the sheet thickness reduction rate T. As illustrated in FIG. 8, compared with Comparative Example 1, the change in the sheet thickness reduction rate T is gradual in Example 4 and Example 6. That is, compared with Comparative Example 1, the sheet thickness distribution of the edge 132a of the vertical flange part 132 is uniform in Example 4 and Example 6.

As illustrated in FIG. 8 and Table 1-2, the length of the modification region R1 of the edge 132a of the vertical flange part 132, i.e., the region satisfying the above-described Formula (1), is longer in Example 4 and Example 6 compared with Comparative Example 1. The length of the modification region R1 in Example 4 was 4.0 mm, which was 2.0 times the sheet thickness t: 2.0 mm of the starting material. The length of the modification region R1 in Example 6 was 6.0 mm, which was 3.0 times the sheet thickness t: 2.0 mm of the starting material. On the other hand, the length of the modification region R1 in Comparative Example 1 was 2.0 mm, which was 1.0 time the sheet thickness t: 2.0 mm of the starting material.

As illustrated in Table 1-2, the length of the modification region R1 became 2.0 times or more the sheet thickness t of the starting material also in examples other than Example 4 and example 6. In each example, the length of the modification region R1 is 6.0 times or less the sheet thickness t of the starting material. On the other hand, in each Comparative Example, the length of the modification region R1 is less than 2.0 times the sheet thickness t of the starting material. From the results, it can be said that, when the structural member 10 is produced with the producing method according to the present disclosure, the length of the modification region R1 becomes 2.0 times or more to 6.0 times or less the sheet thickness t of the starting material (the sheet thickness t0 of the top plate 111), and the sheet thickness distribution of the second flange 13 is uniform.

When the structural member 10 was shaped with hot stamping under the conditions of Example 20, Example 19, and Comparative Example 5, the low hardness region R2 satisfying the above-described Formula (2) was generated in the edge 132a of the vertical flange part 132. The length of the low hardness region R2 in Example 20 was 10.0 mm, which was 5.0 times the sheet thickness t of the starting material. The length of the low hardness region R2 in Example 19 was 20.0 mm, which was 10.0 times the sheet thickness t of the starting material. On the other hand, the length of the low hardness region R2 in Comparative Example 5 was 8.0 mm, which was 4.0 times the sheet thickness t of the starting material. From the results, it can be said that, when the structural member 10 is shaped with hot stamping in the producing method according to the present disclosure, the length of the low hardness region R2 becomes 5.0 times or more to 10.0 times or less the sheet thickness t of the starting material, and the hardness distribution of the second flange 13 is uniform.

REFERENCE SIGNS LIST

    10, 10A: Structural Member
    11: Member Body

111: Top Plate
111a: Side Portion
112: Vertical Wall
12: First Flange
13: Second Flange
131: Horizontal Flange Part
131a: End
132: Vertical Flange Part
132a: Edge
14: Ridgeline Portion
141: Corner Portion
20: Die
21: First Lower Die
211: Shaping Surface
22: Second Lower Die
221: Shaping Surface
23: Upper Die
24: Pad
25: Cushion Mechanism
M: Starting Material


**Claims**

1. A method for producing a structural member for automobiles, comprising:

   a preparation step of preparing a starting material made of a metal sheet; and
   a shaping step of shaping the starting material into the structural member by using a die,
   wherein the structural member includes:

   a member body including a top plate that extends in a longitudinal direction of the structural member, and that has two side portions facing each other in a width direction of the structural member, and a vertical wall that is connected to each of the side portions via a ridgeline portion;
   a first flange that is connected to the vertical wall on an opposite side of the top plate, and that protrudes from the vertical wall in the width direction; and
   a second flange that is provided continuously with an end of the member body in the longitudinal direction, and that includes a horizontal flange part protruding from the top plate in the width direction, and a vertical flange part connected to an end of the horizontal flange part on the member body side via the ridgeline portion, and extending from the horizontal flange part to the first flange,
   the die includes:

   an upper die;
   a first lower die for shaping the member body and the first flange, the first lower die being arranged to face the upper die;
   a second lower die for shaping the second flange, the second lower die being arranged next to the first lower die and to face the upper die, and
   the shaping step includes:

   a first step of sandwiching the starting material between the upper die and the first lower die, while not sandwiching the starting material between the upper die and the second lower die; and
   a second step of shaping the second flange by sandwiching the starting material between the upper die and the second lower die after the first step.

2. The method for producing according to claim 1,

   wherein the die further includes a pad, and
   in the first step, after pressing the starting material with the pad, the starting material is sandwiched between the upper die and the first lower die.

**3.** The method for producing according to claim 1 or 2,

wherein, by providing a step height in advance between a shaping surface of the first lower die and a shaping surface of the second lower die, when the upper die is relatively moved closer to the first lower die and the second lower die in the first step, the first lower die sandwiches the starting material with the upper die before the second lower die,

in the second step, by moving the upper die in a state of sandwiching the starting material with the first lower die further closer to the second lower die relatively, the step height disappears and the second lower die sandwiches the starting material with the upper die, and

a size of the step height before starting the first step is a sheet thickness of the starting material or more to 5.0 times of the sheet thickness or less.

**4.** The method for producing according to claim 3,

wherein the first lower die is configured to be movable up and down by a cushion mechanism, and in the shaping step, the upper die is moved down toward the first lower die and the second lower die.

**5.** The method for producing according to claim 1, further comprising:

a preshaping step of shaping an intermediate shaped product from a metal sheet,

wherein, in the shaping step, by using the intermediate shaped product as the starting material, the structural member is shaped from the starting material.

**6.** The method for producing according to claim 1, further comprising:

a heating step of heating the starting material,

wherein, in the shaping step, the starting material heated in the heating step is shaped into the structural member.

**7.** The method for producing according to claim 1,

wherein the metal sheet is a steel sheet having a tensile strength of 590 MPa or more.

**8.** A structural member for automobiles, comprising:

a member body including a top plate that extends in a longitudinal direction of the structural member, and that has two side portions facing each other in a width direction of the structural member, and a vertical wall that is connected to each of the side portions via a ridgeline portion;

a first flange that is connected to the vertical wall on an opposite side of the top plate, and that protrudes from the vertical wall in the width direction; and

a second flange that is provided continuously with an end of the member body in the longitudinal direction, and that includes a horizontal flange part protruding from the top plate in the width direction, and vertical flange part connected to an end of the horizontal flange part on the member body side via the ridgeline portion, and extending from the horizontal flange part to the first flange,

wherein, when a sheet thickness reduction rate based on a sheet thickness of the top plate is set to T [%], a length of a region having the sheet thickness reduction rate T that satisfies the following Formula (1) in an edge of the vertical flange part is 2.0 times or more to 6.0 times or less the sheet thickness

$$0.9 \times \mathrm{Tmax} \leq \mathrm{T} \leq \mathrm{Tmax} \quad (1)$$

where Tmax [%] is a maximum value of the sheet thickness reduction rate in the edge of the vertical flange part.

**9.** The structural member according to claim 8,

wherein a length of a region having a Vickers hardness HV [HV] that satisfies the following Formula (2) in the edge of the vertical flange part is 5.0 times or more to 10.0 times or less the sheet thickness

$$\mathrm{HV_{Tmax}} - 10.0 \leq \mathrm{HV} \leq \mathrm{HV_{Tmax}} + 10.0 \quad (2)$$

where $HV_{Tmax}$ [HV] is Vickers hardness of a portion having the maximum value Tmax of the sheet thickness reduction rate of the edge of the vertical flange part.

10. The structural member according to claim 8,
   wherein an average value of the Vickers hardness measured at 30 locations that are distant from each other by the sheet thickness or more in a surface of the vertical flange part is 300.0 Hv or more, and a standard deviation of the Vickers hardness is 70.0 Hv or less.

11. The structural member according to claim 8,
   wherein the structural member is formed with a steel sheet having a tensile strength of 590 MPa or more.

12. The structural member according to any one of claims 8 to 11,
   wherein the ridgeline portion includes a corner portion extending toward the horizontal flange part from the top plate, and having a curvature radius of 20.0 mm or less in plan view of the structural member.

FIG. 1

FIG. 2

FIG. 3A

20

IIIC

IIID

23

23

IIID

24

IIIC

22

21

FIG. 3B

FIG. 3C

FIG. 3D

FIG. 3E

FIG. 3F

FIG. 3G

FIG. 3H

FIG. 3I

10

111

14

13  131  14

132

132a  11

131b

161

R1

132a

162

132

12a

12

FIG. 4

FIG. 5

FIG. 6

Width Direction

Longitudinal Direction

10A

13

131

132  111b

111

11

132

17

112

12

112

12

FIG. 7

FIG. 8

**EP 4 397 423 A1**

<table>
<tr>
<td colspan="2" align="center">INTERNATIONAL SEARCH REPORT</td>
<td>International application No.<br><br>**PCT/JP2022/032517**</td>
</tr>
</table>

**A. CLASSIFICATION OF SUBJECT MATTER**

***B21D 22/26***(2006.01)i; ***B21D 22/20***(2006.01)i
FI:  B21D22/26 D; B21D22/20 E; B21D22/20 H

According to International Patent Classification (IPC) or to both national classification and IPC

**B. FIELDS SEARCHED**

Minimum documentation searched (classification system followed by classification symbols)

B21D22/26; B21D22/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2013-35068 A (NIPPON STEEL & SUMITOMO METAL CORPORATION) 21 February 2013 (2013-02-21)<br>paragraphs [0001], [0015], [0019], [0026], [0029], [0032], [0038], [0059], fig. 2, 6 | 8-12 |
| A | paragraphs [0001], [0015], [0019], [0026], [0029], [0032], [0038], [0059], fig. 2, 6 | 1-7 |
| A | JP 2016-175089 A (NIPPON STEEL & SUMITOMO METAL CORPORATION) 06 October 2016 (2016-10-06)<br>entire text, all drawings | 1-12 |
| A | CN 105478596 A (CHERY AUTOMOBILE CO., LTD.) 13 April 2016 (2016-04-13)<br>entire text, all drawings | 1-12 |
| A | JP 2020-152173 A (JFE STEEL CORPORATION) 24 September 2020 (2020-09-24)<br>entire text, all drawings | 1-2 |

☐ Further documents are listed in the continuation of Box C.　　☑ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **05 October 2022** | **25 October 2022** |

| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br>Telephone No. |
|---|---|

Form PCT/ISA/210 (second sheet) (January 2015)

48

**INTERNATIONAL SEARCH REPORT**
Information on patent family members

International application No.

**PCT/JP2022/032517**

| Patent document cited in search report | | | Publication date (day/month/year) | Patent family member(s) | | | Publication date (day/month/year) |
|---|---|---|---|---|---|---|---|
| JP | 2013-35068 | A | 21 February 2013 | US | 2012/0297853 | A1 | |
| | | | | paragraphs [0003], [0079], [0088], [0097], [0101], [0111], [0119], [0133], fig. 2, 6 | | | |
| | | | | EP | 2572811 | A1 | |
| | | | | AU | 2011255898 | A1 | |
| | | | | TW | 201206585 | A | |
| | | | | CN | 102791396 | A | |
| | | | | MX | 2012009036 | A | |
| | | | | KR | 10-2012-0140236 | A | |
| | | | | RU | 2012133251 | A | |
| | | | | ZA | 201205651 | B | |
| | | | | BR | 112012021712 | A2 | |
| | | | | ES | 2741881 | T3 | |
| JP | 2016-175089 | A | 06 October 2016 | (Family: none) | | | |
| CN | 105478596 | A | 13 April 2016 | (Family: none) | | | |
| JP | 2020-152173 | A | 24 September 2020 | US | 2022/0152680 | A1 | |
| | | | | entire text, all drawings | | | |
| | | | | EP | 3925866 | A1 | |
| | | | | KR | 10-2021-0124326 | A | |
| | | | | CN | 113631466 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6436166 B
- JP 5958644 B
- JP 2019013952 A